# EUROPEAN PATENT APPLICATION

(11) **EP 4 850 886 A1**
(43) Date of publication of application: **09.12.2026**
(21) Application number: 25180415.9
(22) Date of filing: 03.06.2025
(51) Int. Cl.: B29C 48/025, B29C 48/25, B29C 48/27, B29C 48/695, B29C 48/70, B01D 29/52, B01D 35/12

(54) **A FILTERING SYSTEM AND A METHOD FOR OPERATING THE SAME**

(71) Applicant: NORDSON CORPORATION, Westlake, OH 44145 (US); Fimic S.r.l., 35010 Carmignano di Brenta (PD) (IT)
(72) Inventor: ANDRESS, Michael, Altenberge (DE); SILBERMANN, Thomas, Münster (DE); WÖSTMANN, Stefan, Sassenberg-Füchtorf (DE)
(74) Representative: Ter Meer und Partner mbB

(57) **Abstract**

The present invention relates to a filtering system (1) for filtration of a polymer melt flow, the polymer melt flow being conveyed within the filter system (1) under highpressure and high-temperature, the system (1, 16a, 162) comprising a divider (10) for dividing an unfiltered polymer melt flow into two or more unfiltered partial polymer melt flows and two or more filter devices (11), each of the filter devices (11) having its own independent casing (113); each of the filter devices (11) being removably pipe (12, 182)-connected downstream of a respective one of the two or more divider outlets (102) and having a filter device inlet (111) at which one respective unfiltered partial polymer melt flow is fed; each of the filter devices (11) being configured for filtration of a respective one of the two or more unfiltered partial polymer melt flows when switched into a filtering-mode and having a filter device outlet (112) at which one respective filtered partial polymer melt flow is delivered; wherein the filtering system (1) is configured to operate in full filtering mode in which all filter devices (11) deliver respective partial filtered polymer melt flows continuously and simultaneously. The invention also relates to a method for operating such a filtering system (1). The invention also relates to a length expansion compensator (17) within a pipe (12, 182)-connected system (1, 16a, 162).

## Description

The present invention relates to a filtering system for filtration of a polymer melt flow, the polymer - also referred to as thermoplastic - melt flow being conveyed within the filtering system under high pressure and high temperature. The present invention further relates to a corresponding method for operating such a filtering system.

### Prior Art

Polymer melt filter devices are well known in polymer processing, especially if there is a need for a certain degree of purity of a polymer melt that should be further processed in subsequent production stages. These filter devices are used to provide a filtered polymer melt by removing unwanted solid particles, foreign objects or other containment that is part of a liquified (unfiltered) polymer melt.

In the event of contamination of a filtration area within a filter device, the filter device needs to stop filtering of the polymer melt to be cleaned at some point of time. However, to enable a continuous provision of at least some of the filtered polymer melt for subsequent components in the polymer processing system, several different methods are known from the prior art. For instance, it is known from DE 198 23 765 C1 to use two identical filter cartridges that are operated in alternating manner. If one filter cartridge is in filtering mode, the other filter cartridge is in a non-filtering mode, e.g. for cleaning purposes. Respective inlet- and outlet-valves are used to switch the incoming polymer melt flow from one filter cartridge to another filter cartridge. With such a concept, polymer melt is filtered continuously, and the amount of filtered polymer melt remains constant over time. However, since only one of the two filter cartridges is in filtering mode, such a concept is highly inefficient due to redundancy and non-use of filtration area.

To increase efficiency for continuous filtering of polymer melt, it is known from EP 1 423 178 B1 to operate a filter device that has two or more filtration chambers with respective filtration areas, here filter screens in one or more movably mounted filter carrier, also called screen holder, e.g. in form of cylindric pistons. In case one of the filter screens is contaminated and needs to be cleaned, only the respective filter carrier is moved in a manner to ensure that at least another remaining filter screen of that filter carrier is still positioned for filtering of some of the polymer melt. This concept ensures at least 50% and with more filter carriers up to 75 % of continuous filtering of polymer melt at a time.

Especially in the recycling industry, thermoplastic is liquified and the resulting polymer melt has a very high degree of contamination, namely a high number of solid particles (foreign objects) that need to be separated from the polymer before such polymer can be processed further.

There is an additional demand - especially in the recycling industry - for filtering a very high amount of polymer melt such that a very high throughput can be achieved.

The known concepts of filter devices cannot provide such a high throughput because their filtration areas are either contaminated very quickly and so, there is always a significant amount of filtration area in cleaning mode, or the known concepts cannot withstand the high temperatures and high pressures for conveying the polymer melt as needed in the recycling industry.

### Summary

It is an object of the present disclosure to provide a filtering system that can continuously filter a very large amount of unfiltered and highly contaminated polymer melt and that can withstand high temperatures and high pressures for conveying the polymer melt. It is a further object of the present disclosure to avoid physical damage to pipe connections or components within the system that would be caused by mechanical stress or thermal stress caused by temperature changes and/or caused by dimensional intolerance.

These objectives are solved by the features of the independent claims. Advantageous embodiments can be derived from the respective dependent claims.

In an aspect there is provided a filtering system for filtration of a polymer melt flow. The polymer melt flow is conveyed within the filtering system under high pressure and high temperature.

High pressure within this disclosure may mean a pressure value of the polymer melt when conveyed within the filtering system of more than 100 bar. The pressure value may for instance be up to 200 bar, or up to 250 bar or even more.

High temperature within this disclosure may mean a temperature value of the polymer melt when conveyed within the filtering system of more than 100 degree Celsius. The temperature value may for instance be up to 250 degree Celsius or even more.

The inventive filtering system comprises more than one component that is pipe-connected to each other. The filtering system at least comprises a divider, two or more filter devices, and respective pipes for the pipe-connection as components. However, the filtering system may additionally comprise further components, such as combiner, length compensator, pump, pelletizer, extruder.

The inventive filtering system comprises a divider (as a component of the filtering system) for dividing an unfiltered polymer melt flow into two or more unfiltered partial polymer melt flows. The divider comprises a divider inlet at which the unfiltered polymer melt flow is fed. The term "feeding" within this disclosure means any kind of provisioning of the polymer melt flow, such as injecting, supplying, charging of the polymer melt flow. The divider comprises two or more divider outlets, each divider outlet being configured for delivering one - a distinct one - of the two or more unfiltered partial polymer melt flows. The term "delivering" within this disclosure means any kind of outflowing of the polymer melt flow, such as draining, purging, discharging of the polymer melt flow.

The inventive filtering system further comprises two or more filter devices (as components of the filtering system), preferably large area filter devices. The two or more filter devices may each ensure a high throughput of a few hundred up to several tons of polymer melt per one hour to be filtered within the filtering system.

Each of the filter devices has its own independent casing, also referred to as own shielding or own housing. This means that there are at least two, preferably more than two, structurally independent filter devices within the filtering system. These two or more filter devices have no structural components or holding components or shielding components or housing components or rack components or traveling components that they use in common. Two or more filter devices with their own independent casings are different from two filtration chambers that are arranged at or integrated into one single (common) casing. Two or more filter devices with their own independent casings are also different from a filter device that is equipped with two identical filter cartridges being hinged to one common main structure for holding, moving or racking both filter cartridges together as these filter cartridges would not be independent from each other within the meaning of this present disclosure.

Each of the filter devices is configured to be switched between different operating modes. Each of the filter devices may be configured to be switched into one or more of the following operating modes: "self-cleaning mode", "maintenance mode", "exchange mode" or "(full) filtering mode".

Each of the filter devices is configured to be switched into "(full) filtering mode" as an operating mode. If one of the filter devices is in "full filtering mode", the filter device delivers the entire partial polymer melt flow at its filter device outlet. If one of the filter devices is in "filtering mode", the filter device delivers at least parts of the partial polymer melt flow at its filter device outlet. If one of the filter devices delivers only parts of the partial polymer melt flow at its filter device outlet (filtering mode), it may at the same time be in a self-cleaning mode.

Each of the filter devices is configured to be switched into "maintenance mode" as an operating mode. If one of the filter devices is in maintenance mode, the filter device is not in full filtering-mode and not in self-cleaning-mode. Also, the filtering system is not in full filtering-mode. If the filter device is in the maintenance mode, the divider outlet to which this filter device is pipe-connected stops feeding the respective partial polymer melt flow to the filter inlet of that filter device. The filter device enters a cooling-phase as a part of the maintenance mode upon which end, the temperature of the filter device is much lower than the high temperature during filtering mode and pipe-connections at the filter device inlet and outlet can be opened and/or removed for maintenance/repairing of that filter device. The maintenance mode also comprises a pre-heating phase, in which a respective filter device is preheated from lower temperature to high temperature to be used in the filtering mode or self-cleaning mode. The maintenance mode also comprises the cooling phase, in which the respective filter device is cooled from high temperature to lower temperature to be used for removing or disconnecting the filter device from the filtering system and/or for maintenance or repairing of that filtration path.

Each of the filter devices is configured to be switched into "exchange mode" as an operating mode. If one of the filter devices is in exchange mode, the filter device is not in full filtering mode and not in self-cleaning-mode. Also, the filtering system is not in full filtering mode. If the filter device is in the exchange mode, the divider outlet to which this filter device is pipe-connected stops feeding the respective partial polymer melt flow to the filter inlet of that filter device. Pipe-connections at the respective filter device inlet and outlet can be opened and/or removed for exchange of that filter device. In contrast to the maintenance mode, the filtration path and the filter device do not enter a cooling-phase, thus the maintenance mode does not have a cooling-phase. So, the temperature within the filtration path remains within the range of the temperature in the filtering mode or the self-cleaning mode. The exchange mode may also comprise a pre-heating phase, in which a respective new filter device (that exchanges the current filter device) is preheated from lower temperature to high temperature to be used in the filtering mode or self-cleaning mode. Entering an exchange mode instead of a maintenance mode has the advantage that the filtration path containing a to-be-exchanged filter device remains at the high temperature and is not cooled down to avoid that remaining polymer melt within that filtration path also cools down.

Each of the filter devices may be configured to be switched into "self-cleaning mode" as an operating mode. If one of the filter devices is in self-cleaning mode, the filter device is not in full filtering mode and not in maintenance-mode, but it may be still in filtering mode (to deliver only parts of the partial polymer melt flow at its filter device outlet). Also, the filter system is not in full filtering mode. The filter device may switch into self-cleaning mode in an automated manner meaning without any human interaction if a self-cleaning condition is fulfilled. The filter device may switch into self-cleaning mode if a predefined containment level - as a self-cleaning condition - of one or more of the filtration areas (filter screens) within the respective filter device is determined. Such determination may be based on one or more pressure sensors output signal or one or more melt-flow-throughput-measurement sensors. The filter device may for instance switch into self-cleaning mode if material different from than the current material is liquefied and is used as the to-be-filtered polymer melt within the production, and this change of material may be a self-cleaning condition. The filter device may for instance switch into self-cleaning mode if a material-color different from the current material color is liquefied and is used as the to-be-filtered polymer melt within the production, and this change of material-color may be a self-cleaning condition. The filter device may for instance switch into self-cleaning mode after expiry of a predefined time interval - as a self-cleaning condition. The time interval may represent a time duration in which a filter device (or a respective filtration area thereof) delivers filtered polymer melt without interruption. These time durations may depend on the specific to-be-filtered polymer melt and/or a certain amount of throughput of polymer melt flow that has been transferred via a specific filtration area and/or a requirement as set by a manufacturer of the filter device.

Backflush-methods as for instance described in EP 1 423 178 B1 may be used in the self-cleaning mode. In such a backflush-mode, the respective filter device does not deliver its entire filtered partial polymer melt flow at the filter device outlet but may still deliver parts thereof, e.g. 50 % or 75%. The filter device may clean the respectively contaminated filtration area by backflushing of polymer melt basically by flushing parts of already filtered partial polymer melt in a reverse direction to the filtration area (filter screen). If the respective filter device is in a self-cleaning mode using backflush-methods, it is possible that this filter device can still deliver parts of the filtered partial polymer melt flow at its filter device outlet, so called continuous self-cleaning-mode, e.g. if only 25% or 50% of the respective filtration areas are backflushed.

Scraping-methods as for instance described in EP 3 088 157 B1 may be used in the self-cleaning mode. In such a scraping-mode, respective scraping means are used to clean a respective filtration area within the filter device, e.g. by moving scraping blades over the filtration area, e.g. rotating or linearly moving these scraping blades over the filtration area. If the respective filter device is in a self-cleaning mode using scraping-methods, it is possible that this filter device does not deliver filtered partial polymer melt flow at its filter device outlet (at all), so called discontinuous self-cleaning-mode, e.g. if the entire filtration area is scraped.

Each of the filter devices being pipe-connected downstream of a respective one of the two or more divider outlets and has a filter device inlet at which one respective unfiltered partial polymer melt flow is fed. Each of the filter devices is configured for filtration of a respective one of the two or more unfiltered partial polymer melt flows when switched into a filtering mode and has a filter device outlet at which one respective filtered partial polymer melt flow is delivered.

Since each filter device has an independent casing and is removably pipe-connected downstream the corresponding divider outlet, it is possible to remove one of the filter devices from the filtering system, e.g. for maintenance or repairing or replacing or exchanging purposes, whereas the filtering system is still in a filtering mode and filters partial polymer melt flows using remaining filter devices within the filtering system.

The filtering system is configured to operate in full filtering mode in which all filter devices deliver respective partial filtered polymer melt flows continuously and simultaneously, e.g. to subsequent components within the polymer processing. Full filtering-mode is a term used herein to express that all filter devices - and all filtration areas within each filter device - within the filtering system are in a full production mode and none of the filter devices is in a self-cleaning-mode or an exchange-mode, or a maintenance mode. Simultaneously operating within this disclosure is the opposite to alternatingly operating and expresses that the filter devices operate in parallel over time. Continuously operating within this disclosure means that there is continuous production of polymer melt at the outlet.

In a preferred embodiment, each of the filter devices is configured to be switched into a self-cleaning mode and the filtering system further configured to operate in filtering mode in which one of the two or more filter devices is in a self-cleaning mode. The term "filtering mode" is used differently from "full filtering mode" in this disclosure. A filtering mode of the filtering system is used herein to express that at least one of the two or more filter devices within the filtering system is not in a full filtering mode (full production mode), meaning that this particular filter device does not deliver a filtered polymer melt flow with its filtration area or with at least one of its filtration areas. Filtering mode is used herein to also express that at least one of the two or more filter devices within the filtering system is in filtering mode to deliver a filtered polymer melt flow.

This inventive filtering system ensures parallel and simultaneous filtering of partial polymer melt flows using two or more distinct filter devices. Since the polymer melt flow is conveyed at high pressure and high temperature, the filtering system can filter from a few hundred up to more than two tons, preferably more than four tons, more preferably more than six tons of polymer melt flow per one hour. So, a very high throughput for the subsequent polymer processing is possible.

Since the polymer melt has high viscosity, high pressure as well as high temperature is needed to enable the desired high throughput of polymer melt within the filtering system. In return, each single component within the filtering system needs to be resistant to such high temperature and high pressure values.

Preferably, the polymer melt flow is made from recycling polymer material by liquifying it. The resulting polymer melt has a very high degree of contamination, namely a high number of solid particles (foreign objects) that need to be separated from the polymer before such polymer can be processed. For instance, the share of contamination within the polymer melt flow may be in the range of up to 5% and the exact value of contamination may be lowered to 2% or 1%, which highly depends on a pre-handling, e.g. washing or flushing, of the raw thermoplastic material prior its liquefaction into said to-be-filtered polymer melt. This filtering system can for instance be used for thermoplastic polyurethane, short TPU; polyethylene, short PE; polypropylene, short PP; polystyrene, short PS; acrylonitrile butadiene styrene, short ABS; polyethylene terephthalate, short PET; and other thermoplastic polymers. These contaminations (also called impurities) include, for example, organic or inorganic materials such as wood, paper, metal or non-metallic foreign substances as well as polymeric foreign substances, such as residues of other plastics. After filtering, the filtered polymer melt may only contain particles with a size smaller than 200 Microns, preferably smaller than 150 Microns.

In a preferred embodiment, at least one of the two or more filter devices, preferably each filter device, may comprise one or more dimensionally stable and robust filtration areas arranged in a flow channel between the filter device inlet and filter device outlet within the casing. Dimensionally stable means that these filtration areas withstand high pressure and high temperature within the filtering system. These filtration areas within each filter device may be made of robust plates or disks having holes with diameters that allow the unfiltered partial polymer melt to pass through in the desired purity whereas foreign objects contained in the unfiltered partial polymer melt are separated from the polymer melt.

To withstand high temperature and high pressure, these filtration areas are preferably made of metal. For instance, each of the filter devices may comprise at least one perforated metal disc or perforated metal plate that is solidly attached to a corresponding polymer melt flow channel within the casing of the filter device. In further preferred embodiments the filtration area is two-fold, having a first sheet of perforated metal with holes having a first diameter. This sheet of perforated metal is attached - in direction of the unfiltered (partial) polymer melt flow - on a surface of the perforated metal disc/metal plate that has a second diameter, larger than the first diameter. In this case, the perforated metal disc/metal plate acts as a supporting member for the metal sheet attached to it. In flow direction of the unfiltered (partial) polymer melt flow, the sheet of perforated metal is arranged in front of the perforated metal disc/metal plate.

In a preferred embodiment, for filtration of the unfiltered partial polymer melt flow, at least one of the two or more filter devices, preferably each filter device, may comprise at least two filtration areas within its casing, wherein these filtration areas being arranged in series between its filter device inlet and its filter device outlet. The arrangement in series may allow a double filtration that results in a higher degree of purity of the filtered polymer melt, e.g. having a first filtration area for removing coarser material and a second filtration area for finer materials. Such a filter device for instance described in EP 3 088 157 B1.

In a preferred embodiment, for filtration of the unfiltered partial polymer melt flow, at least one of the two or more filter devices, preferably each filter device, may comprise at least two filtration areas within its casing, wherein these filtration areas being arranged in parallel between its filter device inlet and its filter device outlet. Within these filtration areas very large filter screens can be arranged, as for instance described in EP 2 025 495 B1, to enable a high throughput per each filter device. The parallel arrangement allows continuous delivery polymer melt as the filter device can switch to a self-cleaning mode in which single individual filtration areas are backflushed while remaining filtration areas are still in filtering-mode as described above.

The filter system may comprise identical filter devices to enable smooth operation during production. However, it may be useful that there are different types of filter devices, e.g. one of the two or more filter devices with filtration areas arranged in series whereas another one of the two or more filter device has filtration areas arranged in parallel. Using different types of filter devices may be advantageous in a case in which different quality or quantity of partial polymer melt flow is needed for subsequent polymer processing systems, for instance a pelletizer system or a polymer-film producing system or injection-mold system.

In a preferred embodiment, the filtering system further comprises a heating system configured for pre-heating the filtering system before entering a filtering-mode of at least one of the filter devices. As the filtering system can have a very large extent that affects the temperature of the polymer melt flow while being conveyed within the filter system, the pre-heating system advantageously ensures a stabile high temperature within the filtering system that is needed for conveying the polymer melt flow.

In a further preferred embodiment, the heating system is a liquid-based heating system configured for pipe-based pre-heating of each component within the filtering system. Liquid-based heating systems ensure a stabile high temperature of the polymer melt flow while being conveyed within the filtering system by using a heating liquid with good specific heat capacities for enabling a high energy storage capacity. The liquid-based heating system may for instance be a water-based heating system or an oil-based heating system. The heating system may comprise heat-pipes as heating elements to convey the heating liquid. These heat-pipes may guide through individual components such as divider, combiner, each filter device within the filtering system, e.g. by surrounding respective flow channels as well as individual polymer melt flow pipes within the filtering system. The heating system is preferably a central heating system for the entire filtering system.

In another preferred embodiment, the heating system is an electric heating system configured for pre-heating of each component within the filtering system. Electric heating systems ensure a stabile high temperature of the polymer melt flow while being conveyed within the filtering system by using one or more heating elements, such as heat-wires, for converting electrical energy into thermal energy. These heating elements are preferably arranged in the vicinity of one or more flow channels through which polymer melt is conveyed within the system. The electric heating system may for instance comprise heat-wires that are arranged spirally or as windings around respective flow channels within components individual polymer melt flow pipes within the filtering system. The electrical heating system is preferably a central heating system for the entire filtering system.

In a further preferred embodiment, the filtering system may comprise one or more length expansion compensators (as component(s) of the filtering system) within one or more filtration paths of the filtering system, each length expansion compensator being configured to adapt its relative length to compensate a respective length difference that is caused by mechanical stress based on dimensional intolerances and/or component-movement and/or caused by thermal stress based on temperature change within the filtering system. The respective length difference can be a length expansion or length reduction, meaning a variation or difference of length in longitudinal direction within the pipe-connected filtering system. Length expansion and length reduction are herein referred to as length expansion.

A filtration path herein is defined as a distinct pipe-connected path that comprises pipes to and from one of the two or more filter devices as well as one of the two or more filter devices within the filtering system.

For instance, if one of the two or more filter devices is switched from full filtering-mode or filtering-mode or self-cleaning-mode into a maintenance mode or exchange mode, this filter device then may enter a cooling phase in which the temperature within this filtration path significantly drops from high temperature to much lower temperature, e.g. in the range of ambient air temperature or room temperature. This temperature drop may be caused by switching-off one or more heating elements of the heating-system that may be configured to heat the particular filter device in full filtering mode or filtering mode or self-cleaning mode and/or by a cooling system that may be configured to cool this particular filter device and all components (e.g. divider, pipes, etc.) connected to it or by waiting a certain amount of time until the lower temperature is reached. This will result in very different temperatures within different filtration paths.

For instance, if one of the two or more filter devices is switched from maintenance mode or exchange mode into full-filtering mode or filtering-mode or self-cleaning mode, one or more heating elements of the heating system may pre-heat the respective filtration path within the pre-heating phase which results in that the temperature of this filtration path will significantly rise from ambient air temperature or room temperature to the high temperature needed for conveying the polymer melt flow in filtering mode. This will result in very different temperatures within different filtration paths.

For instance, if the two or more filter devices are switched-on at different times and/or are switched from maintenance mode or exchange mode into full filtering mode or filtering mode or self-cleaning mode at very different times, one of the two or more filter device will end the pre-heating phase earlier than another one of the two or more filter devices which will result in very different temperatures within the different filtration paths.

For instance, one or more heating elements, such as heat-pipes or heat-wires, within a heating system may be malfunctioning or may be switched off, which will result in very different temperatures within different filtration paths.

For instance, one (or more) of the two or more divider outlets stop feeding the respective partial polymer melt flow to the respective filter inlets, e.g. caused by respective valves, which will result in very different temperatures within the different filtration paths.

So, there can be huge temperature differences within different filtration paths caused by the above scenarios. These huge temperature differences within different filtration paths cause significant length differences (variations) between these individual filtration paths that lead to thermal stress within the filtering system.

There may also be mechanical stress within the filtering system that is caused by dimensional intolerances, e.g. caused by manufacturing intolerances within identical parts or components and/or by addition of manufacturing intolerances within different filtration paths and/or by movements, such as vibrations during operation or during exchange of components.

Any such length difference that results from this thermal stress or mechanical stress is advantageously compensated by said length expansion compensator that is arranged within the filtration path to avoid physical damage to the components within the filtering system that would be caused by tension deformation.

In a preferred embodiment, a length expansion compensator is pipe-connectedly arranged in the pipe connection between a divider outlet and its respective filter device inlet. In another preferred embodiment, a length expansion compensator is pipe-connectedly arranged in the pipe connection downstream of a respective filter device outlet, the length expansion compensator having a variable length, wherein the length expansion compensator is configured to compensate a respective length difference that is caused by mechanical stress based on dimensional intolerances and/or component-movement and/or caused by thermal stress based on temperature change within the filtering system. The choice of the exact position of the length expansion compensator is mainly driven by the specific setup of the filtering system itself, especially the position of the individual filter system components itself and/or their relative position and/or angle to each other within a filtration path or within the filtering system. This specific setup of the filtering system determines the installation location of the (one or more) length compensator. So, advantageously, the exact position of the length expansion compensator can be filtering system specific and may vary between different filtering systems or with different filtering system setups.

There may be more than one length expansion compensator per filtration path, e.g. one compensator that is pipe-connected downstream the filter device outlet of one of the two or more filter device and another length expansion compensator that is pipe-connected upstream the filter device inlet of the one of the two or more filter device. This may enable a more precise length variation compensation within one distinct filtration path.

The length expansion compensator may have a variable length and may for instance be formed as an elastic member that is pipe-connected at respective filter device inlets/outlets and/or respective divider outlet. For the variable length, expansion joints of the compensator may be pushed together during the heating phase and may be pulled apart during the cooling phase.

In a preferred embodiment, the length expansion compensator may comprise a hollow male part and a hollow female part. When installed within the filtering system, a polymer melt flow can flow within the hollow in direction from the female part to the male part of said compensator or vice versa in opposite direction namely from the male part to the female part, meaning that the length expansion compensator can be driven in both directions without technical disadvantages. The cavity within the male part and the female part is a fluid channel for the polymer melt flow.

The hollow male part may comprise a protruding portion configured to slide into the cavity of the hollow female part in a form-fitting sliding manner. The protruding portion is preferably also hollow and part of the fluid channel to transport the polymer melt flow. Due to the form-fitting sliding of male part into female part, a relative length variation can be achieved in longitudinal direction. So, an axial movement in flow direction is possible by sliding movements, but at the same time provides positive locking against radially acting forces.

In a preferred embodiment, the male part may comprise a terminal, hereinafter also referred to as second terminal, that can be an inlet or an outlet. The terminal is used for enabling a removable connection to a respective terminal of another component in the filtering system being arranged upstream or downstream of the length compensator. The cavity in the hollow male part may have a first truncated portion in lengthwise cross-section with its widest part being arranged at the terminal. With this first truncation the diameter of the cavity within the male part is increased in longitudinal flow direction which is advantageous for reducing flow resistance or flow stress when the polymer melt flow enters into the male part from the terminal of the other component or exits from the male part to the terminal of the other component, preferably by keeping pressure value constant within the male part and to reduce additional forces in longitudinal flow direction. In one implementation of this preferred embodiment, the male part may comprise the terminal for being removably connected to a terminal of a pipe. This pipe is preferably the pipe from the pipe-connection between divider outlet and filter device inlet. The pipe may alternatively or additionally be the pipe from the pipe-connection between filter device outlet to a component downstream the filter device.

In a preferred embodiment, the cavity in the hollow male part has a second truncated portion in lengthwise cross-section in the protruding portion with its widest part being facing toward the hollow female part. With this second truncation the diameter of the cavity within the male part is reduced in longitudinal flow direction which is advantageous for reducing flow resistance or flow stress when the polymer melt flow enters from the male part to the female part.

Preferably, the first truncation has a longer longitudinal extension in flow direction than the second truncation. This may be dependent on the specific installation length of the length expansion compensator and allows a more even acceleration of the polymer melt flow within the hollow and the avoidance of so-called dead melt areas.

With these truncations within the cavity of the hollow male part a minimum shear rate and a minimum pressure loss caused by this compensator may be achieved, whereas it is still ensured that the compensator can withstand the high temperature and the high pressure.

In a preferred embodiment, the hollow male part and the hollow female part being moveably mechanically connected to each other via at least one sliding rod. The at least one sliding rod avoids any misalignment between the male part and the female part during length adaption. Preferably there are at least two sliding rods for smoothly guiding sliding movement of the male part into the female part. The number of the sliding rods is preferably identical to the number of fastening screws of the respective pipe adapter, such as a flange at the pipe-connection.

In a preferred embodiment, a sliding length between the hollow male part and the hollow female part is limited using at least one sliding stop, preferably two or more sliding stops. The at least one sliding stop avoids the female part and the hollow part from being pressed apart that may be dependent on the internal pressure within the hollow. The stops are formed in a manner to fix the movement of the male part from the female part at a maximum length (distance) that the compensator should have. The stop also avoids that the male part and the female part can be separated from each other, e.g. due to component movements and vibrations in the filtering system.

In a preferred embodiment, the polymer melt is isolated from the atmosphere by a clearance width in the protruding portion and a sealing element, preferably a sealing ring, being arranged between the hollow male part and the hollow female part. This sealing element, preferably a sealing ring avoids that polymer melt can exit the filtering system at the compensator. The sealing element, preferably a sealing ring, also has a clamping function to hold the (male part of the) compensator in position.

In a preferred embodiment, the hollow female part is integrally formed in the casing of a component of the filtering system. In other words, the hollow female part of one of the one or more length expansion compensators and its corresponding component share the same casing. This reduces the size required for the installation of that compensator. The component can be one of the components of the filtering system as described herein, such as divider, filter device, combiner, pipe, multi-port valves, pelletizer, extruder, pump or the like. The hollow female part may for instance be arranged at an outlet of such a component. The hollow female part may alternatively be arranged at an inlet of such a component, whereas in such alternative scenario the melt flow direction may be reversed inside the hollow of the compensator.

In a preferred embodiment, the filtering system further comprises a pump (as a component of the filtering system) positioned upstream the divider and/or downstream the two or more filter devices. The one or more pumps are used to establish the high pressure that is needed to convey the high viscosity polymer melt flow within the filtering device.

In a preferred embodiment, the filtering system further comprises one pump (as a component of the filtering system) positioned downstream each of the two or more filter devices. Preferably, one pelletizer (as a component of the filtering system) is positioned downstream each of the pumps. In this embodiment, the filtering system is split into two or more partial filtering system lines, each being configured for independently feeding a partial filtered polymer melt flow to a distinct pelletizer that each can be operated in a maintenance mode or pelletizing mode. So, one of the partial filtering system lines is operated totally independent from another partial filtering system lines.

The pump as described herein may be a screw pump as for instance described in EP 3 939 768 A1. Alternatively, the pump may be a gear pump, which advantageously has no offset compared to a screw pump.

In a preferred embodiment, the divider comprises a multi-port valve configured to open and close the two or more divider outlets individually, wherein one of the two or more divider outlets is open to feed unfiltered partial polymer melt flow to a filter device inlet of one of the two or more filter devices that is switched into filtering mode, whereas another one of the two or more divider outlets is closed and no unfiltered partial polymer melt flow is fed to a filter device inlet of the another one of the two or more filter devices that is switched into a maintenance mode and/or an exchange mode. In this embodiment, the filtering system comprises the multi-port valve for independently operating each filter device. So, if one of the filter devices is switched into maintenance-mode or exchange-mode, the remaining filter device can still operate in filtering mode or self-cleaning mode in order to provide filtered partial polymer melt flows.

In a preferred embodiment, the filtering system further comprises a combiner (as a component of the filtering system) for combining the two or more filtered partial polymer melt flows into one combined filtered polymer melt flow, wherein the combiner has two or more combiner inlets each being pipe-connected with a respective filter outlet of one of the two or more filter devices at which a respective one filtered partial polymer melt flow is fed; and a combiner outlet configured for delivering the filtered polymer melt flow that is combined from each partial filtered polymer melt flow. In this embodiment, the filtering system combines the partial filtered polymer melt flows directly downstream of the filter devices to reduce the number of components within the filtering system.

In a preferred embodiment, the combiner comprises a multi-port valve configured to open and close the two or more combiner inlets individually, wherein one of the two or more combiner inlets is open such that filtered partial polymer melt flow is fed from a filter device outlet of one of the two or more filter devices that is switched into filtering mode whereas another one of the two or more combiner inlets is closed such that no filtered partial polymer melt flow is fed from a filter device outlet of another one of the two or more filter devices that is switched into a maintenance mode and/or an exchange mode. In this embodiment, the filtering system comprises the multi-port valve for independently operating each filter device. So, if one of the filter devices is switched into maintenance-mode or exchange-mode, the remaining filter device can still operate in filtering mode or self-cleaning mode in order to provide filtered partial polymer melt flows.

In another aspect of the present disclosure, there is provided a method for operating a filtering system according to one of the preceding claims.

The method may comprise the following steps of: pre-heating at least one of two or more filtration lines within the filtering system, each filtration line having one of the two or more filter devices; switching the filter system in full filtering mode, wherein when in full filtering mode, all filter devices deliver their respective partial filtered polymer melt flows continuously and simultaneously; monitoring a self-cleaning condition of each of the two or more filter devices independently when the filter device is in filtering mode, wherein when a self-cleaning condition is fulfilled for one of the two or more filter devices, the filter system switches into a self-cleaning-mode for the filter devices for which the self-cleaning condition is fulfilled, whereas at least another one of the two or more filter devices remains in filtering mode.

A self-cleaning condition may for instance be a containment level of a filter device and the self-cleaning condition is fulfilled, if a containment level of the filter device (or a filtration area thereof) is reached. A self-cleaning condition may for instance be a change of material to be filtered. A self-cleaning condition may for instance be a change of material-color to be filtered. A self-cleaning condition may for instance be an expiry of a predefined time interval and the self-cleaning condition is fulfilled, if the filter device (or a filtration area thereof) delivers filtered polymer melt without interruption for the predefined time interval.

In a preferred embodiment, the method further comprises cooling at least one of two or more filtration lines (=filtration paths) within the filtering system, when a maintenance state of the at least one of the two or more filter devices is reached so that this one or more filter device stops delivering of the respective filtered partial polymer melt flow whereas at least another one of the two or more filter devices remains in filtering mode.

Maintenance state means that at least one filtration area of one of the two or more filter devices has reached or overshot a predefined containment level.

In another aspect of the present disclosure, there is provided a length expansion compensator within a pipe-connected system in which liquid, such as the above described polymer melt, is conveyed under high pressure and high temperature. The pipe-connected system may be a filtering system as described above. The length expansion compensator may be designed as described above. The length expansion compensator is pipe-connectedly arranged within the system and is configured to adapt its relative length (175) to compensate a respective length difference that is caused by mechanical stress based on dimensional intolerances and/or component-movement and/or caused by thermal stress based on temperature within the pipe connected system. The length expansion compensator comprises a hollow male part and a hollow female part. The cavity within the male part and the female part is a fluid channel for the polymer melt flow.

This relative length difference is advantageously compensated by said length expansion compensator that is arranged within the pipe-connected system to avoid physical damage to the pipe connections or components within the system that would be caused by tension deformation.

The hollow male part comprises a protruding portion configured to slide into the cavity of the hollow female part in a form-fitting sliding manner. The protruding portion is preferably also hollow and part of the fluid channel to transport the polymer melt flow. Due to the form-fitting sliding of male part into female part, a relative length variation can be achieved in longitudinal direction. So, an axial movement in flow direction is possible by sliding movements, but at the same time provides positive locking against radially acting forces.

The male part may comprise a terminal for being removably connected to a respective terminal of another component in the pipe-connected system being arranged upstream or downstream of the length compensator, wherein the cavity in the hollow male part has a first truncated portion in lengthwise cross-section with its widest part being arranged at the terminal, wherein the terminal preferably being an outlet connected to a terminal of a pipe. With this first truncation the diameter of the cavity within the male part is increased in longitudinal flow direction which is advantageous for reducing flow resistance or flow stress when the polymer melt flow exits from the male part to the pipe, and preferably for keeping pressure value constant within the male part and to reduce additional forces in longitudinal flow direction.

The cavity in the hollow male part may have a second truncated portion in lengthwise cross-section arranged in the protruding portion with its widest part being facing towards the hollow female part. With this second truncation the diameter of the cavity within the male part is reduced in longitudinal flow direction which is advantageous for reducing flow resistance or flow stress when the polymer melt flow enters from the male part to the female part.

Preferably, the first truncation has a longer longitudinal extension in flow direction than the second truncation. This may be dependent on the specific installation length of the length expansion compensator and also allows a more even acceleration of the polymer melt flow within the hollow and the avoidance of so-called dead melt areas.

With these truncations within the cavity of the hollow male part a minimum shear rate and a minimum pressure loss caused by this compensator may be achieved, whereas it is still ensured that the compensator can withstand the high temperature and the high pressure.

The hollow male part and the hollow female part may be movably mechanically connected to each other via at least one sliding rod. The at least one sliding rod avoids any misalignment between the male part and the female part during length adaption. Preferably there are at least two sliding rods for smoothly guiding sliding movement of the male part into the female part. The number of the sliding rods is preferably identical to the number of fastening screws of the respective pipe adapter, e.g. a flange at the pipe-connection.

A sliding length between the hollow male part and the hollow female part may be limited using at least one sliding stop. The at least one sliding stop avoids the female part and the hollow part from being pressed apart that may be dependent on the internal pressure within the hollow. The stops are formed in a manner to fix the movement of the male part from the female part at a maximum length (distance) that the compensator should have. The stop also avoids that the male part and the female part can be separated from each other, e.g. due to component movements and vibrations in the filtering system.

Liquid conveyed in the pipe-connected system may be isolated from the atmosphere by a clearance width in the protruding portion and a sealing element, preferably a sealing ring, being arranged between the hollow male part and the hollow female part. This sealing element, preferably a sealing ring, avoids that polymer melt can exit the filtering system at the compensator. The sealing element, preferably a sealing ring, also has a clamping function to hold the (male part of the) compensator in position.

In a preferred embodiment, the hollow female part is integrally formed in the casing of a component of the pipe-connected system. In other words, the hollow female part of the length expansion compensator and the corresponding component share the same casing. This reduces the size required for the installation. The component can be all components of the pipe-connected system as described herein. The hollow female part may for instance be arranged at an outlet of such a component. The hollow female part may alternatively be arranged at an inlet of such a component, whereas in such alternative scenario the melt flow direction may be reversed inside the hollow of the compensator.

### Brief description of the figures

Various aspects of the invention and further embodiments and advantages of the invention are further explained in more detail in the following. Identical components in the figures are provided with identical reference signs. The figures are not to be regarded as true to scale; individual elements of the figures may be shown in exaggerated size or exaggerated simplification.
Fig. 1 shows an exemplary embodiment of a filtering system according to the prior art.
Fig. 2 shows an exemplary embodiment of a filtering system according to the present invention.
Fig. 3 shows an exemplary embodiment of a filtering system according to the present invention.
Figs. 4a-c show exemplary embodiments of a filtering system according to the present invention.
Figs. 5a-c show exemplary embodiments of a filtering system according to the present invention.
Figs. 6a-c show exemplary embodiments of a filtering system according to the present invention.
Fig. 7a-c shows exemplary embodiments of a filtering system according to the present invention.
Fig. 8a-b show exemplary embodiments of a length expansion compensator in different lengths for a filtering system according to the present invention.
Fig. 9 shows an exemplary embodiment of a length expansion compensator for a filtering system according to the present invention.
Fig. 10 shows an exemplary embodiment of a length expansion compensator for a filtering system according to the present invention.
Fig. 11 shows an exemplary embodiment of a length expansion compensator for a filtering system according to the present invention.

### Detailed description of the figures

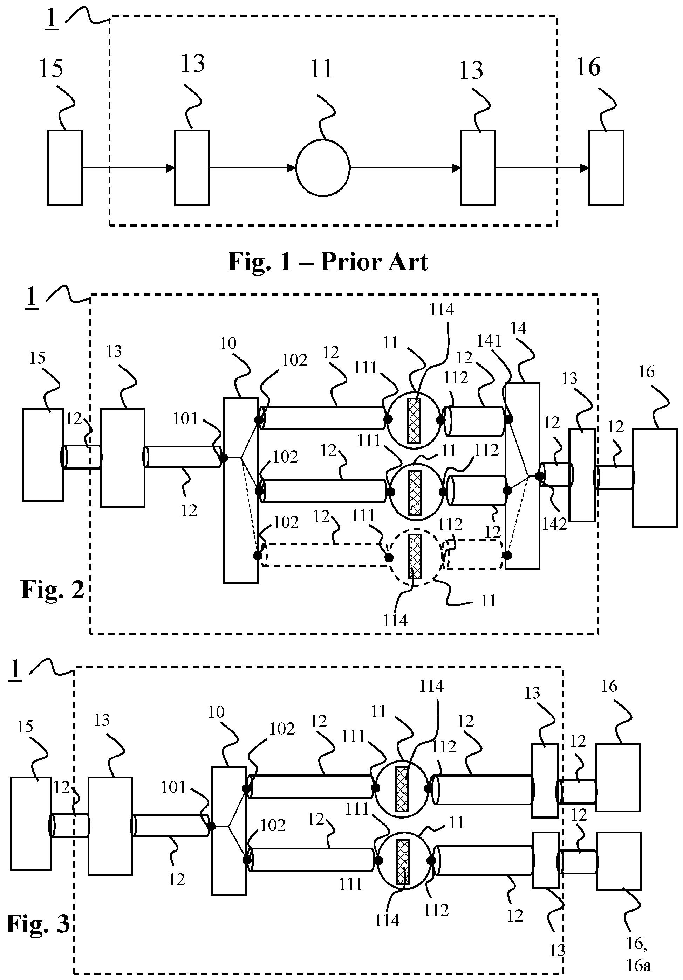

Fig. 1 shows an exemplary embodiment of filtering system 1 according to the prior art. Filtering system 1 comprises one filtration path having a first pump 13 to which an unfiltered polymer melt flow is fed from an extruder 15 that is external to the filtering system 1. The first pump 13 feeds the unfiltered polymer melt flow to a filter device 11. The filter device 11 provides filtered polymer melt flow to a second pump 13. The second pump 13 provides the filtered polymer melt flow to a pelletizer 16. This system is disadvantageously limited to a certain throughput.

Fig. 2 shows an exemplary embodiment of filtering system 1 according to the present invention. Also here, the filtering system 1 comprises a first pump 13 to which an unfiltered polymer melt flow is fed from an extruder 15 that is external to the filtering system 1. The extruder 15 may be a single-screw or a twin-screw extruder 15. The polymer melt flow from the extruder 15 is liquified polymer that has a high amount of impurities in it, because the raw material is from recycling material. The polymer melt flow with the filtering system 1 is high viscous liquid having much more than 150 mPAs and having a high temperature in the range of 200 to 250 degree Celsius or even above that, and the pumps 13 included in the filter system 1 enable that the polymer melt flow being conveyed within the filtering system 1 has a very high pressure of up to 200 bar or even above. The polymer melt flow with the filtering system 1 is high viscous liquid having for instance a viscosity value with the range of 200 mPAs up to 13500 PAs.

Fig. 2 shows three filtration paths (hereinafter also referred to as filtration lines) that are arranged in parallel between a divider 10 and a combiner 14. Each filtration path comprises corresponding pipes 12 and one distinct filter device 11 that has its own independent casing 113 and at least one filtration area 114. The number of paths is exemplary and in the further figures these parallel filtration paths are reduced to two for simplification. The number of filtration areas 114 is exemplary. For instance, two filtration areas 114 for each filter device 11 can be arranged in series (not shown) or in parallel (not shown) between the respective inlet 111 and outlet 112.

An outlet of the first pump 13 is pipe-connected via a pipe 12 to an inlet 101 of the divider 10 such that the unfiltered polymer melt flow is fed to the divider 10. The divider comprises three identical divider outlets 102, each being pipe-connected via three pipes 12 to corresponding filter device inlets 111 of filter devices 11 of the three independent and parallel filtration paths. Each filter device 11 further comprises a corresponding filter device outlet 112 at which a corresponding partial polymer melt flow can be delivered to respective combiner inlets 141 of the combiner 14 via corresponding pipes 12 in pipe-connection. Combiner 12 combines all partial filtered polymer melt flows into one combined filtered polymer melt flow that is delivered at the combiner outlet 142. The combiner outlet 142 is pipe connected via pipe 12 to a second pump 13 which feeds the combined filtered polymer melt flow to pelletizer 16. A pelletizer 16 may be an underwater pelletizer, UWP for granulation of the filtered polymer melt for further polymer processing.

Such a high temperature, high pressurized and high viscous polymer melt flow can only be filtered with filter devices 11 having filtration areas that comprise stable metal meshes and being robust to withstand these high pressures and high temperatures. For instance, each of the filter devices may comprise a perforated metal disc or metal plate solidly attached to a hollow body on whose front surface, in the direction of the unfiltered polymer melt flow, a further sheet of perforated metal rests. The perforated metal has hole-diameters that allow the unfiltered partial polymer melt to pass through in the desired purity whereas foreign objects contained in the unfiltered partial polymer melt are separated from the polymer melt.

In a preferred embodiment, each filter device 11 comprises at least one filtration area 114, wherein the filtration area in the direction from the filter device inlet 111 to the filter device outlet 112 has perforated metal with holes that have a diameter suitable to separate foreign objects (contamination particles) with a size bigger than 200 Microns, preferably bigger than 150 Microns from the polymer melt flow.

In specific scenarios each filter device 11 can comprises at least two filtration areas 114 that are arranged in series in the polymer melt flow, wherein the first filtration area in the direction from the filter device inlet 111 to the filter device outlet 112 has perforated metal with holes that have a first diameter that is greater than a second diameter of holes in perforated metal of a second filtration area arranged downstream of the first filtration area within the same filter device 11. The greater first diameter will separate larger foreign objects, whereas the smaller second diameter will separate smaller foreign objects. The filtered polymer melt flow will only contain particles with a size smaller than 200 Microns, preferably smaller than 150 Microns.

Filtering system 1 according to Fig. 2 comprises combiner 14 to feed the combined filtered polymer melt flow to one (and only one) pump 13 that further feeds it to one (and only one) pelletizer 16. This scenario has the advantage of generating high throughput with least components within the filtering system 1. This filtering system can for instance be used for recycling of thermoplastics, such as thermoplastic polyurethane, short TPU; polyethylene, short PE; polypropylene, short PP; polystyrene, short PS; acrylonitrile butadiene styrene, short ABS; polyethylene terephthalate, short PET; and other thermoplastic polymers.

In Fig. 2, two filtration paths are shown in solid lines, which expresses that the corresponding filter devices 11 can be operated in a filtering mode or in a full filtering mode or in a self-cleaning mode, simultaneously in parallel manner such that at least one of these two solid filtration paths deliver polymer melt flow. For instance, one of the filter devices 11 of the solid line filtration paths may be operated in a filtering mode whereas the other one of the two filter devices 11 of the solid line filtration paths may be operated in a self-cleaning mode. If the self-cleaning mode uses a discontinuous scraping method then this corresponding filter device 11 does not deliver partial polymer melt flow in this mode as no filtration area 114 remains for filtering polymer melt flow. If the self-cleaning mode uses a continuous scraping method then this corresponding filter device 11 does deliver parts of the partial polymer melt flow in this mode as some filtration areas 114 remain for filtering polymer melt flow. If the self-cleaning mode uses a discontinuous backflush method then this corresponding filter device 11 does not deliver partial polymer melt flow in this mode as no filtration area 114 remains for filtering polymer melt flow. If the self-cleaning mode uses a continuous backflush method then this corresponding filter device 11 does deliver parts of the partial polymer melt flow in this mode as some filtration areas 114 remain for filtering polymer melt flow.

In Fig. 2, one filtration line is shown in dashed lines. This should represent a case in which divider 10 as well as combiner 14 each comprises multi-port valves. Such multiport valves enable that filter devices can be operated independently in (full) filtering mode, self-cleaning mode, maintenance mode or exchange mode. As explained above, the two filtration paths that are shown in solid lines represent that the corresponding filter devices 11 are in filtering-mode or full filtering mode and delivering at least parts of a partial polymer melt flows at their respective filter device outlets 112. The filtration line that is shown in dashed lines represents that the corresponding filter device 11 is in maintenance mode or exchange mode and as a consequence it does not deliver a partial polymer melt flow at its respective filter device outlet 112. In other words: Filter devices 11 that operate in full filtering mode and/or filtering mode and/or continuous self-cleaning mode feed filtered partial polymer melt flow to the corresponding inlet 141 of the combiner 14. Filter devices 11 that operate in maintenance mode and/or exchange mode and/or discontinuous self-cleaning mode do not feed filtered partial polymer melt flow to the corresponding inlet 141 of the combiner 14.

Fig. 3 shows an exemplary embodiment of filtering system 1 according to the present invention. In the following, only the differences between the filtering system 1 of Fig. 3 and the filtering system of Fig. 2 are described in greater detail and for additional explanations it is referred to Fig. 2.

One difference between Fig. 2 and Fig. 3 is the omittance of a third filtration path. This is done for simplification of the drawing, and it may be the preferred design. However, it does not mean that filtering system 1 is only capable of handling two distinct filtration paths. The main difference between Fig. 2 and Fig. 3 is the omittance of a combiner at the corresponding filter device outlets 112. Instead, filter device outlets 112 are pipe-connected to two corresponding pumps 13 that are further pipe-connected to two corresponding pelletizers 16. So, the filtration paths are entirely split into two distinct production lines. This enables the maintenance of pelletizers 16 without stopping the production. It also allows to design the filtration paths for different purposes and different throughputs.

The filtering system 1 according to Fig. 3 may be useful to filter the polymer melt flow with different purity within the individual filtration path. So, the filtered partial polymer melt flows have different contaminations. Such a usage may only be advantageous if different pelletizers 16 are installed after the respective filter device 11 within the different filtration paths. Using a system according to Fig. 2 for such a usage would combine (and mix) both partial polymer melt flows which would neglect the effect of the different purities.

The filtering system 1 according to Fig. 3 may be useful if the different filtered partial polymer melt flows should be processed in different machines or systems thereafter. For instance one of the partial polymer melt flows is conveyed to a pelletizer 16 whereas the other one is conveyed to a polymer processing system 16a, such as a polymer-film producing system or injection-mold system.

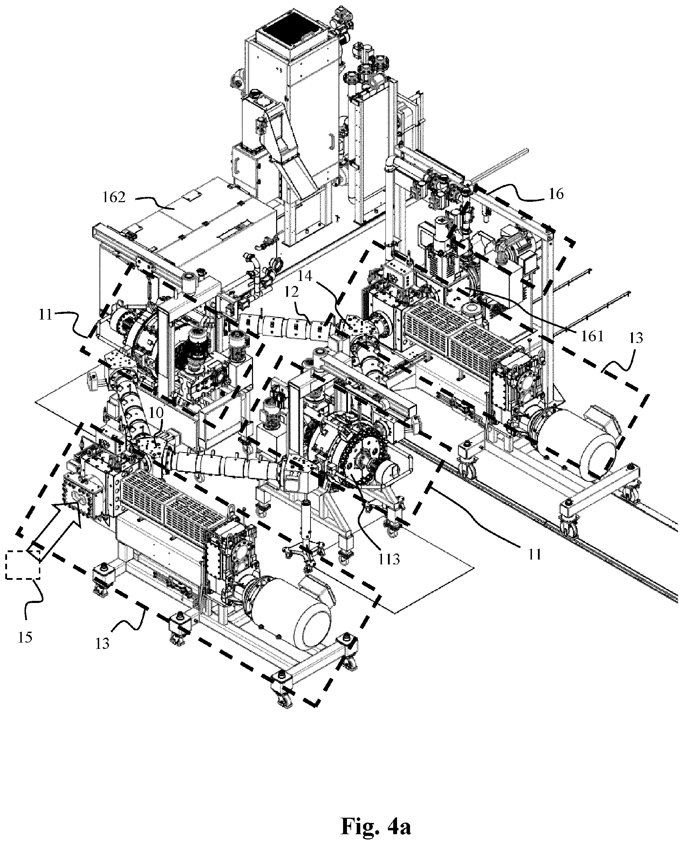

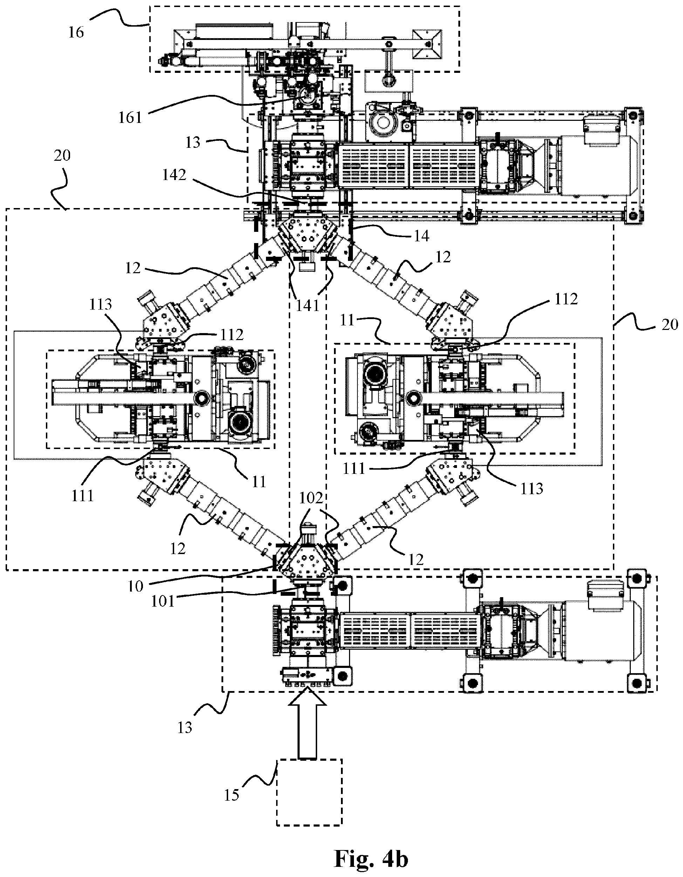

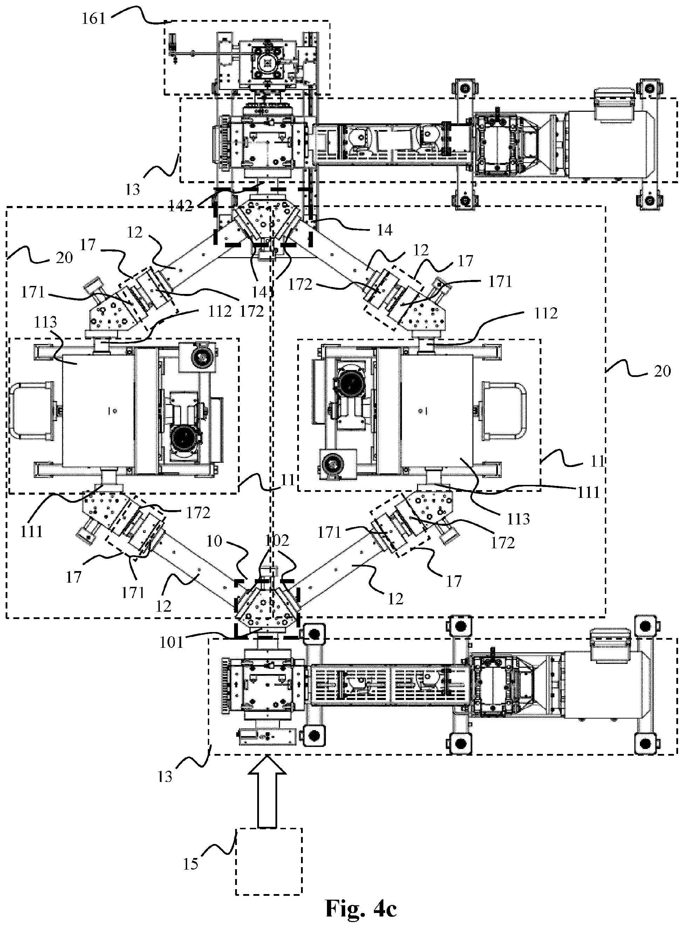

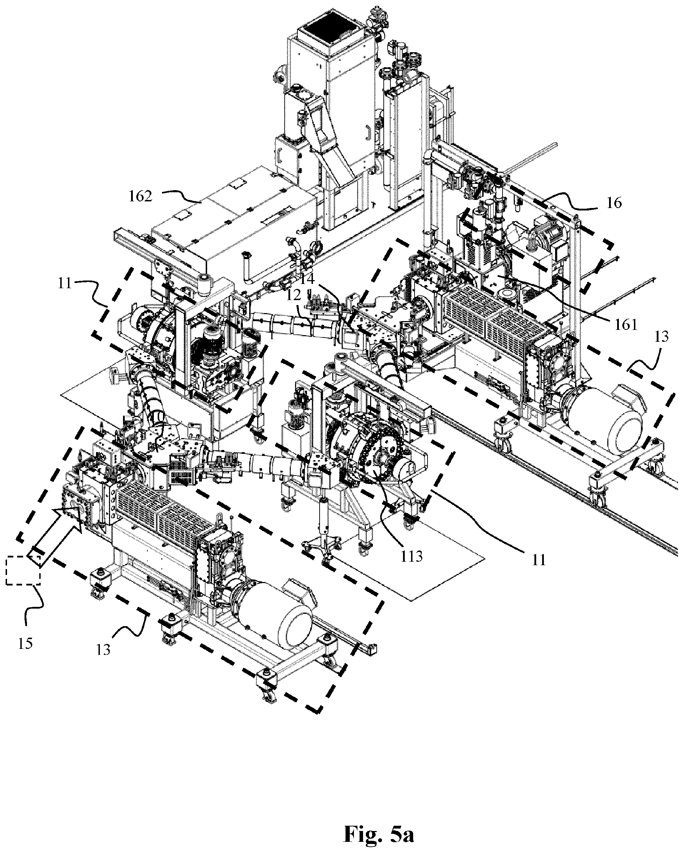

Fig. 4a is an isometric view, Fig. 4b is a top view, and Fig. 4c is an enhanced version in top view of an exemplary embodiment of filtering system 1 according to the present invention. These Figs. 4a-c are described together in the following. Identical components in these Figs. 4a-c have identical reference signs. Figs. 4a-c show the individual components of the filtering system 1 according to Fig. 2 - for a case of only two distinct filtration paths. As can be seen in greater details when comparing Figs. 4 a-c with corresponding Figs. 5a-c, the divider 10 and the combiner 14 in Fig. 4 are not equipped with multi-port valves and so, there is no option to operate the filtration paths independently in (full) filtering mode, self-cleaning mode, maintenance mode and exchange mode. In Figs. 4a-c, each of divider 10 and the combiner 14 is a Y-adapter.

However, according to Figs. 4a-c, the filtration paths 20 can operate independently in (full) filtering mode and self-cleaning mode, so that the filtering system 1 is configured to operate in full filtering mode in which all filter devices 11 deliver respective partial filtered polymer melt flows continuously and simultaneously, e.g. to subsequent components within the polymer processing and none of the filter devices 11 is in a self-cleaning-mode or an exchange-mode, or a maintenance mode. The filtering system 1 is also configured to operate in filtering mode in which one of the two or more filter devices 11 is in a self-cleaning mode, meaning that the filter device 11 does not deliver a filtered polymer melt flow with its filtration area or with at least one of its filtration areas.

This means for the setup in Figs. 4a-c that if one filter device 11 needs to be switched to a maintenance mode or exchange mode, the entire filtering system 1 needs to be switched to the maintenance mode or exchange mode and there is no option to further deliver filtered polymer melt flow from even one of the filter devices 11.

Pipes 12 are also shown and it may be preferred to use pipes 12 with a diameter of 100mm. Other diameters of the pipes 12 can be considered. However, the pipe diameter for all pipes should be identical to avoid pressure differences.

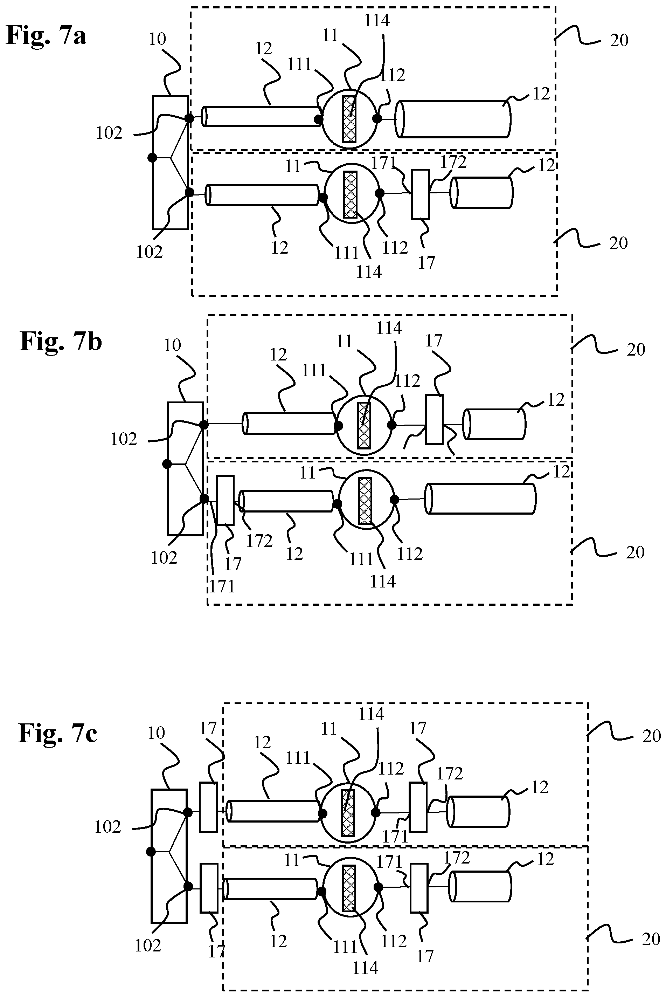

Fig. 4c is an enhanced version of the filter system 1 as shown in Figs. 4a-b and also shows four length expansion compensators 17 that are arranged at respective inlets 111 and outlets 112 of each filter device 11. The position, function and purpose thereof is described with respect to Figs. 7a to 7c.

The position of the length expansion compensator 17 upstream of each filter device 11 is as follows. The inlet 171 of the compensator 17 is connected to a terminal (flange) of a pipe 12 whose distal end is connected to an outlet 102 of divider 10. The outlet 172 of the compensator 17 is connected to the inlet 111 of the filter device 11. However, the position of the length expansion compensator 17 could alternatively between the outlet 102 of the divider 10 and that distal end of pipe 12 (not shown in Fig. 4c).

The position of the length expansion compensator 17 downstream of each filter device 11 is as follows. The inlet 171 of the compensator 17 is connected to the outlet 112 of the filter device 11. The outlet 172 of the compensator 17 is connected to a terminal (flange) of a pipe 12 whose distal end is connected to an inlet 141 of combiner 14. However, the position of the length expansion compensator 17 could alternatively between that distal end of pipe 12 (not shown in Fig. 4c) and an inlet 141 of combiner 14 (not shown in Fig. 4c).

Each length expansion compensator 17 could be turned at 180 degree so that inlet 171 position and outlet position 172 is changed (not shown in Fig. 4c), which would not interfere with the function of the compensator 17 at all.

In Figs. 4a-c, there is a gear pump 13 upstream the divider inlet 101. Between the divider inlet 101 and the pump 13, there may be an adapter as shown (not referenced in Figs. 4a-c).

In Figs. 4a-c there are two filtration paths 20 shown, each comprises a pipe 12 between one of the two divider outlets 102 of divider 10 and filter inlet 111 of filter device 11, the filter device 11, and another pipe 12 between the filter outlet 112 of that filter device 11 and one of the two combiner inlets 141 of combiner 14. Between the pipe 12 (or respectively the second terminal 172 of the compensator 17) and the filter inlet 111, there may be an angle adapter as shown (not referenced in Figs. 4a-c). Between the filter outlet 112 and the pipe 12 (or respectively the first terminal 171 of the compensator 17), there may be another angle adapter as shown (not referenced in Figs. 4a-c). As can be seen in Figs. 4a-c, both filtration paths 20 are built symmetrically to avoid further tensions that would be caused by small temperature differences if the filtration paths 20 would not be symmetrical.

In Figs. 4a-c, there is also shown another gear pump 13 downstream the combiner outlet 142. Between the combiner outlet 142 and the pump 13, there may be an adapter as shown (not referenced in Figs. 4a-c).

In Figs. 4a-c, there is also shown a pelletizer 16 (not shown in Fig. 4c) downstream the other gear pump 13. Between the pelletizer 16 and the other gear pump 13, there may be diverter valve 161. Also shown in Fig. 4a is a dryer system 162 for drying the production output from the pelletizer 16 in case, the pelletizer is an underwater pelletizer.

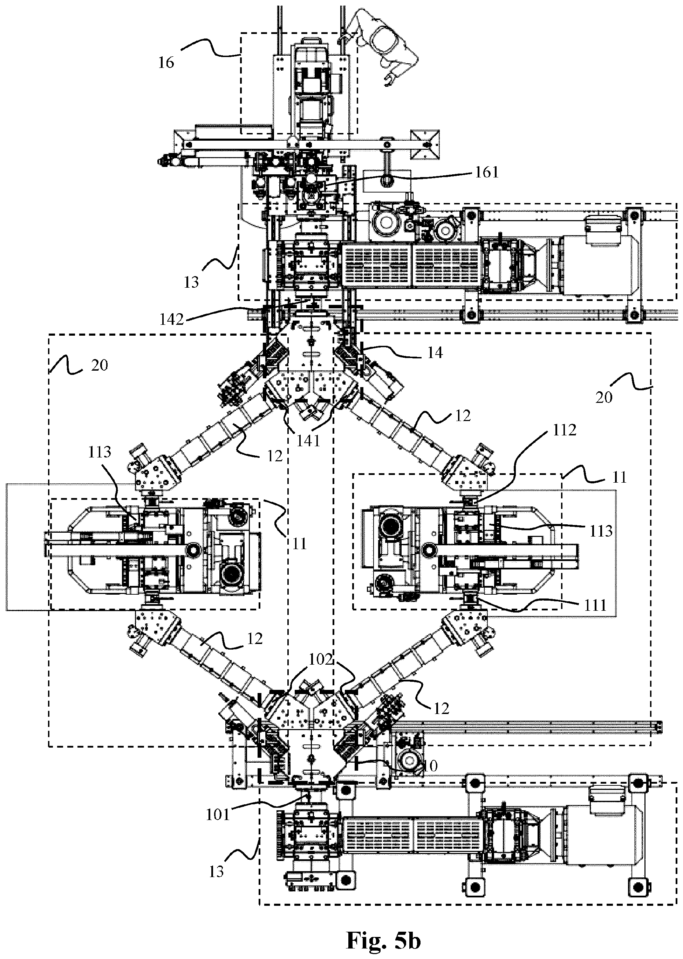

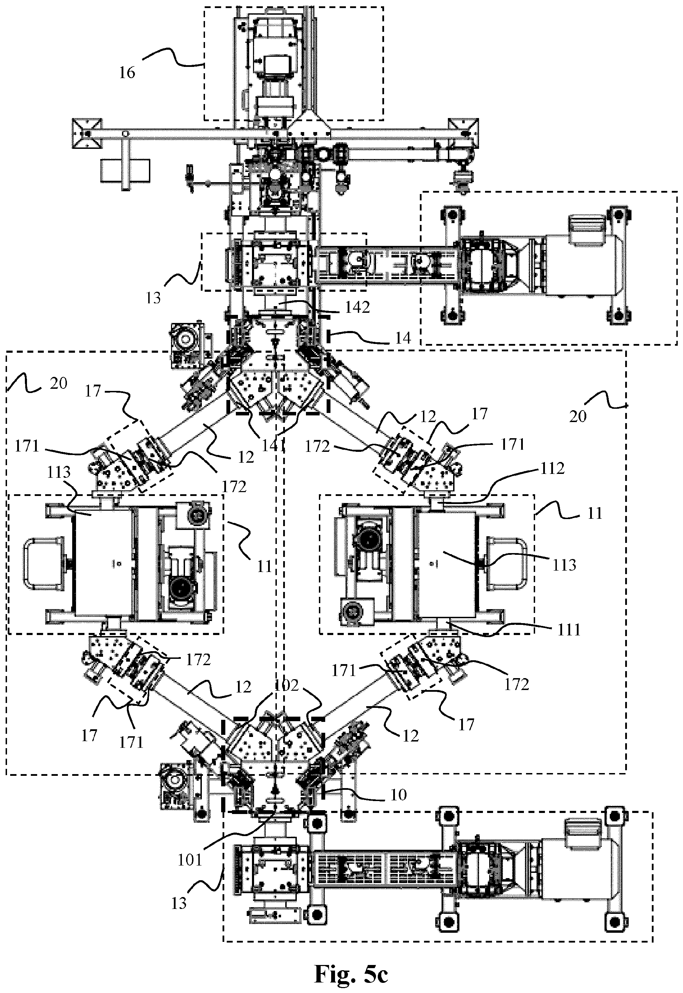

Fig. 5a is an isometric view, Fig. 5b is a top view, and Fig. 5c is an enhanced version in top view of an exemplary embodiment of filtering system 1 according to the present invention. These Figs. 5a-c are described together in the following. Identical components in these Figs. 5a-c have identical reference signs. In the following, only the differences between the filtering system 1 of Figs. 5a-c and the filtering system of Figs. 4a-c are described in greater detail and for additional explanations it is referred to Figs. 4a-c or Fig. 2. As can be seen in greater details when comparing Figs. 4a-c with corresponding views in Figs. 5a-c, the divider 10 and the combiner 14 in Figs. 5a-c are not just Y-adapters but are equipped with multi-port valves and so, there is an option to operate the filtration paths 20 independently in (full) filtering mode, self-cleaning mode, maintenance mode and exchange mode. This means that divider outlets 102 of the divider 10 can be opened or closed. This also means that the inlets 141 of the combiner 14 can be opened or closed. In Figs. 5a-c, each divider outlet 102 and each combiner inlet 141 comprises angle adapter.

Fig. 5c is an enhanced version of the filter system 1 as shown in Figs.5a-b and also shows four length expansion compensators 17 that are arranged at respective inlets 111 and outlets 112 of each filter device 11. The position, function and purpose thereof is described with respect to Figs. 7a to 7c.

The position of the length expansion compensator 17 upstream of each filter device 11 is as follows. The inlet 171 of the compensator 17 is connected to a terminal (flange) of a pipe 12 whose distal end is connected to an outlet 102 of divider 10. The outlet 172 of the compensator 17 is connected to the inlet 111 of the filter device 11. However, the position of the length expansion compensator 17 could alternatively between the outlet 102 of the divider 10 and that distal end of pipe 12 (not shown in Fig. 5c).

The position of the length expansion compensator 17 downstream of each filter device 11 is as follows. The inlet 171 of the compensator 17 is connected to the outlet 112 of the filter device 11. The outlet 172 of the compensator 17 is connected to a terminal (flange) of a pipe 12 whose distal end is connected to an inlet 141 of combiner 14. However, the position of the length expansion compensator 17 could alternatively between that distal end of pipe 12 (not shown in Fig. 5c) and an inlet 141 of combiner 14 (not shown in Fig. 5c).

Each length expansion compensator 17 could be turned at 180 degree so that inlet 171 position and outlet position 172 is changed (not shown in Fig. 5c), which would not interfere with the function of the compensator 17 at all.

In Figs. 5a-c (like in Figs. 4a-c), there is a gear pump 13 upstream the divider inlet 101. Between the divider inlet 101 and the pump 13, there may be an adapter as shown (not referenced in Figs. 5a-c).

If for instance one of the filter device 11 in Fig. 5a-c should be operated in a filtering mode or in a self-cleaning mode, both, the corresponding outlet 102 of the divider 10 and the corresponding inlet 141 of the combiner 14 is opened for that filter device 11 in order to fed unfiltered partial polymer melt to the filter device 11 and to deliver filtered partial polymer melt flow by the filter device 11. The respective other filter device can be operated in a maintenance mode, in which it can be exchanged or repaired etc.

If for instance a filter device 11 in Figs. 5a-c should be operated in a maintenance mode or exchange mode, both, the corresponding outlet 102 of the divider 10 and the corresponding inlet 141 of the combiner 14 is closed for that filter device 11 in order to not fed unfiltered partial polymer melt to the filter device 11 and to not deliver filtered partial polymer melt flow by the filter device 11. The respective other filter device can still be operated in the filtering mode for delivering its partial filtered polymer melt flow.

Also in Fig. 5a-c, both filtration paths 20 are built symmetrically to avoid further tensions that would be caused by small temperature differences if the filtration paths 20 would not be symmetrical.

In Figs. 5a-c (like in Figs. 4a-c), there is also shown another gear pump 13 downstream the combiner outlet 142. Between the combiner outlet 142 and the pump 13, there may be an adapter as shown (not referenced in Figs. 5a-c).

In Figs. 5a-c (like in Figs. 4a-c), there is also shown a pelletizer 16 (not shown in Fig. 4c) downstream the other gear pump 13. Between the pelletizer 16 and the other gear pump 13, there may be diverter valve 161.

Also shown in Fig. 5a is a dryer system 162 for drying the production output from the pelletizer 16 in case, the pelletizer is an underwater pelletizer.

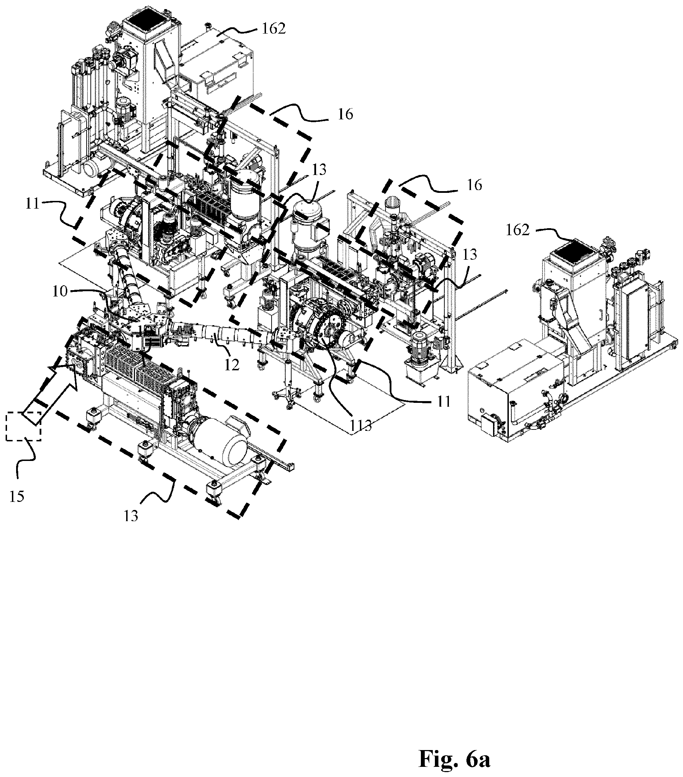

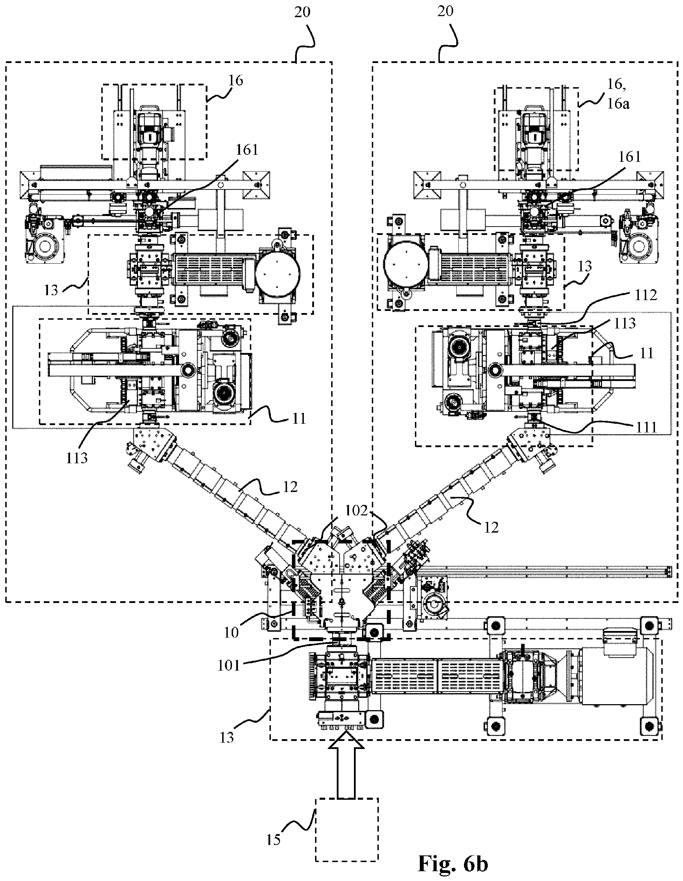

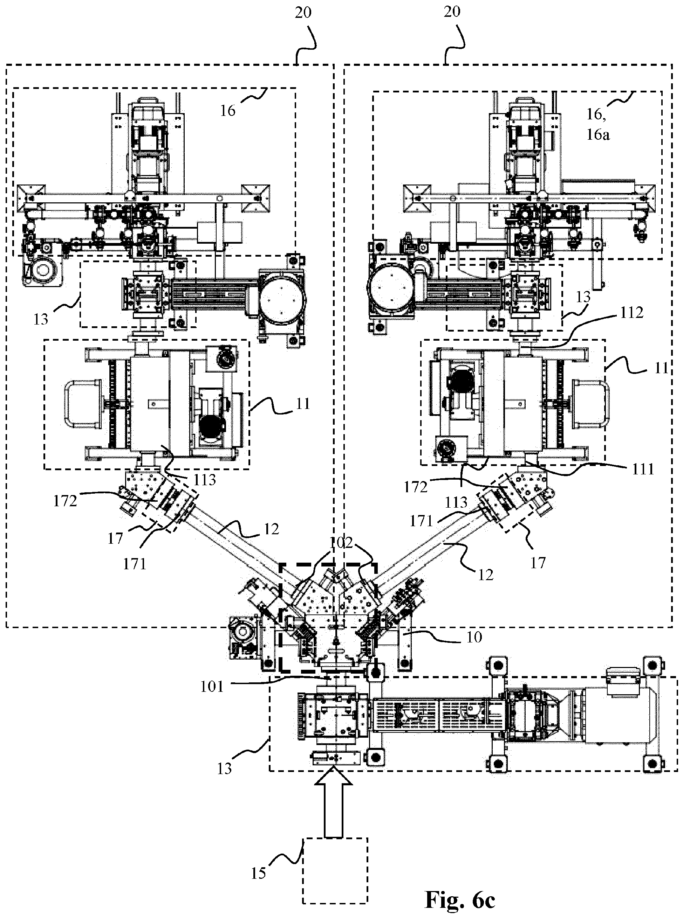

Fig. 6a is an isometric view, Fig. 6b is a top view, and Fig. 6c is an enhanced version in top view of an exemplary embodiment of filtering system 1 according to the present invention. These Figs. 6a-c are described together in the following. Identical components in these Figs. 6a-c have identical reference signs. Figs. 6a-c show the individual components of the filtering system 1 according to Fig. 3. As can be seen in greater details when comparing Figs. 4a-c with corresponding views in Figs. 6a-c, the divider 10 of Figs. 6a-c is equipped with multi-port valves and so, there is an option to operate the filtration paths independently. Pipes 12 are also shown and it may be preferred to use pipes 12 with a diameter of 100mm. Other diameters of pipes 12 can be considered. However, the pipe diameter for all pipes should be identical to avoid pressure differences. Figs. 6a-c also shows two length expansion compensators 17 that are arranged at respective inlets 111 of each filter device 11. In contrast to Figs. 4a-c and Figs. 5a-c, in Figs. 6a-c there are no length expansion compensators 17 arranged at the outlets 112 of the filter device 11. The position, function and purpose thereof are described with respect to Figs. 7a to 7c.

The position of the length expansion compensator 17 upstream of each filter device 11 is as follows. The inlet 171 of the compensator 17 is connected to a terminal (flange) of a pipe 12 whose distal end is connected to an outlet 102 of divider 10. The outlet 172 of the compensator 17 is connected to the inlet 111 of the filter device 11. However, the position of the length expansion compensator 17 could alternatively between the outlet 102 of the divider 10 and that distal end of pipe 12 (not shown in Fig. 6c).

Each length expansion compensator 17 could be turned at 180 degree so that inlet 171 position and outlet position 172 is changed (not shown in Fig. 6c), which would not interfere with the function of the compensator 17 at all.

In Figs. 6a-c there are also two filtration paths 20 shown, but they have another set of components. Each filtration path 20 comprises a pipe 12 between one of the two divider outlets 102 of divider 10 and filter inlet 111 of filter device 11, the filter device 11, one pump 13 downstream of the filter device 11 and a pelletizer 16 downstream of the pump 13. Also in Figs. 6a-c, both filtration paths 20 are built symmetrically to avoid further tensions that would be caused by small temperature differences if the filtration paths 20 would not be symmetrical and that enables to use the same components in each filtration path 20 which smoothens the operation with the filtering system 1.

Also shown in Fig. 6a is a dryer system 162 for drying the production output from the pelletizer 16 in case, the pelletizer is an underwater pelletizer.

Figs. 7a-c show exemplary embodiments of a filtering system 1 according to the present invention with inserted length expansion compensator 17 at different positions within filtration paths 20. Only differences to the setup of the filtering system of Figs. 2 and 3 will be explained hereinafter and the main focus on explanation is directed to the compensator 17.

Fig. 7a shows a first variant of arranging only one length expansion compensator 17 within the filtering system 1, namely downstream of filter outlet 112 of only one of the filter devices 11 in only one of the two filtration paths 20.

Here, first terminal 171 (also referred to as inlet) of the length expansion compensator 17 is connected to the filter outlet 112 and a second terminal 172 (also referred to as outlet) of the length expansion compensator 17 is pipe-connected to pipe 12. This pipe 12 can be connected to a respective combiner inlet of a combiner (not shown in Fig. 7a) within the filtering system 1. Alternatively, and also not shown in Fig. 7a, the second terminal 172 can directly be connected to another pump 13 to enable the filtering system setup as shown in Fig. 3.

Compensator 17 enables compensation of a length difference within the two filtration paths 20 that may occur if the filter devices 11 run in different scenarios.

In one scenario, only one of the two filter devices 11 is switched from (full) filtering-mode or self-cleaning-mode into maintenance mode. This filter device 11 then enters a cooling phase in which the temperature within this filtration path 20 significantly drops from high temperature to a much lower temperature, e.g. in the range of ambient air temperature or room temperature. This will result in very different temperatures within different filtration paths 20.

In another scenario, only one of the two filter devices 11 is switched from maintenance mode into filtering-mode. The heating system pre-heats the respective filtration path 20 within the pre-heating phase which results in that the temperature of this filtration path 20 will significantly rise from ambient air temperature or room temperature to the high temperature needed for conveying the polymer melt flow in filtering mode. This will result in very different temperatures within different filtration paths 20.

In another scenario, the two filter devices 11 are switched on at very different times and/or are switched from maintenance mode into filtering mode at very different times. So, one of the two filter device 11 will end the pre-heating phase earlier than other filter device 11 which will result in very different temperatures within the respective filtration paths.

In another scenario, one or more heating elements of a heating system (not shown in Fig. 7a) may be malfunctioning or be switched off, which will result in very different temperatures within the different filtration paths 20.

In another scenario, one (or more) of the two or more divider outlets 102 stops feeding the respective partial polymer melt flow to the respective filter inlets 111, e.g. caused by respective valves, which will result in very different temperatures within the different filtration paths 20.

So, there can be huge temperature differences within both filtration paths 20 caused by the above scenarios that cause a significant length difference between these individual filtration paths 20. Additionally, or alternatively, there may be mechanical stress within the filtering system that is caused by dimensional intolerances, e.g. caused by manufacturing intolerances within identical parts or components and/or by addition of manufacturing intolerances within different filtration paths. The resulting relative length difference is compensated by said length expansion compensator 17 that is arranged within one of the filtration paths 20 to avoid physical damage to the pipe connections or other components within the filtering system 1 that would be caused by tension deformation.

The choice of the position of the length expansion compensator 17 is mainly driven by the specific setup of the filtering system1 itself, especially the position of the individual filter system 1 components itself and/or their relative position and/or angle to each other within a filtration path 20 or within the filtering system 1. This specific setup of the filtering system 1 determines the installation location of the length expansion compensator 17. So, advantageously, the exact position of the length expansion compensator 17 can be filtering system specific and may vary between different filtering systems 1 or with different filtering system 1 setups.

Fig. 7b shows a second variant of arranging length expansion compensators 17 within the filtering system 1. Here two compensators 17 are arranged within the filtering system 1, each being arranged in one of the two filtration paths 20.

Here, a first compensator 17 is arranged downstream of filter outlet 112 of only one of the filter devices 11 in only one of the two filtration paths 20. Here, first terminal 171 of the length expansion compensator 17 is connected to the filter outlet 112 and a second terminal 172 of the length expansion compensator 17 is pipe-connected to pipe 12. This pipe 12 can be connected to a respective combiner inlet of a combiner (not shown in Fig. 7b) within the filtering system 1.

In addition, a second compensator 17 is arranged downstream of filter outlet 112 of only one of the filter devices 11 in only the second one of the two filtration paths 20. Here, first terminal 171 of the length expansion compensator 17 is connected to divider outlet 102 and a second terminal 172 of the length expansion compensator 17 is pipe-connected to pipe 12 between divider 10 and filter device 11.

Alternatively, and also not shown in Fig. 7b, the pipes 12 downstream of the respective filter devices 11 can directly be connected to respective pumps 13 to enable the system setup as shown in Fig. 3.

As already expressed with Fig. 3, also the filtering system 1 according to Fig. 6 may be useful if the different filtered partial polymer melt flows should be processed in different machines or systems thereafter. For instance one of the partial polymer melt flows is conveyed to a pelletizer 16 whereas the other one is conveyed to a polymer processing system 16a, such as a polymer-film producing system or injection-mold system.

Also, for Fig. 7b there may be huge temperature differences within both filtration paths 20 caused by the scenarios as described in Fig. 7a above that cause a significant length difference between these individual filtration paths 20. This relative length difference is compensated by said length expansion compensators 17 that are arranged within the filtration paths 20 to avoid physical damage to the pipe connections or other components within the filtering system 1 that would be caused by tension deformation.

The choice of the exact number and/or position of the length expansion compensator 17 is mainly driven by the specific setup of the filtering system1 itself, especially the position of the individual filter system 1 components itself and/or their relative position and/or angle to each other within a filtration path 20 or within the filtering system 1. This specific setup of the filtering system 1 determines the installation location of the (one or more) length expansion compensator 17. So, advantageously, the exact position of the length expansion compensator 17 can be filtering system specific and may vary between different filtering systems 1 or with different filtering system 1 setups.

Fig. 7c shows a third variant of arranging length expansion compensators 17 within the filtering system 1. Here, in total four compensators 17 are arranged within two filtration paths 20.

Here, first and second compensators 17 are arranged downstream of each filter outlet 112 in both filtration paths 20. Here, first terminals 171 of the first and second length expansion compensators 17 are connected to the filter outlets 112 and second terminal 172 of the length expansion compensators 17 are pipe-connected to respective pipes 12. Pipes 12 can be connected to respective combiner inlets of a combiner (not shown in Fig. 7c) within the filtering system 1. Alternatively, and not shown in Fig. 7c, the pipes 12 downstream of the respective filter devices 11 can directly be connected to respective pumps 13 to enable the system setup as shown in Fig. 3.

In addition, third and fourth compensators 17 are arranged downstream of each filter outlet 112 in both filtration paths 20. Here, first terminals 171 of the third and fourth length expansion compensator 17 are respectively connected to divider outlets 102 and second terminals 172 of the third and fourth length expansion compensators 17 are pipe-connected to pipes 12 between divider 10 and the respective filter devices 11.

Also, for Fig. 7c there may be huge temperature differences within both filtration paths 20 caused by the scenarios as described in Fig. 7a above that cause a significant length difference between these individual filtration paths 20. This relative length difference is compensated by said length expansion compensators 17 that are arranged within the filtration paths 20 to avoid physical damage to the pipe connections or other components within the filtering system 1 that would be caused by tension deformation.

The choice of the exact number and/or position of the length expansion compensator 17 is mainly driven by the specific setup of the filtering system 1 itself, especially the position of the individual filter system 1 components itself and/or their relative position and/or angle to each other within a filtration path 20 or within the filtering system 1. This specific setup of the filtering system 1 determines the installation location of the (one or more) length expansion compensator 17. So, advantageously, the exact position of the length expansion compensator 17 can be filtering system specific and may vary between different filtering systems 1 or with different filtering system 1 setups.

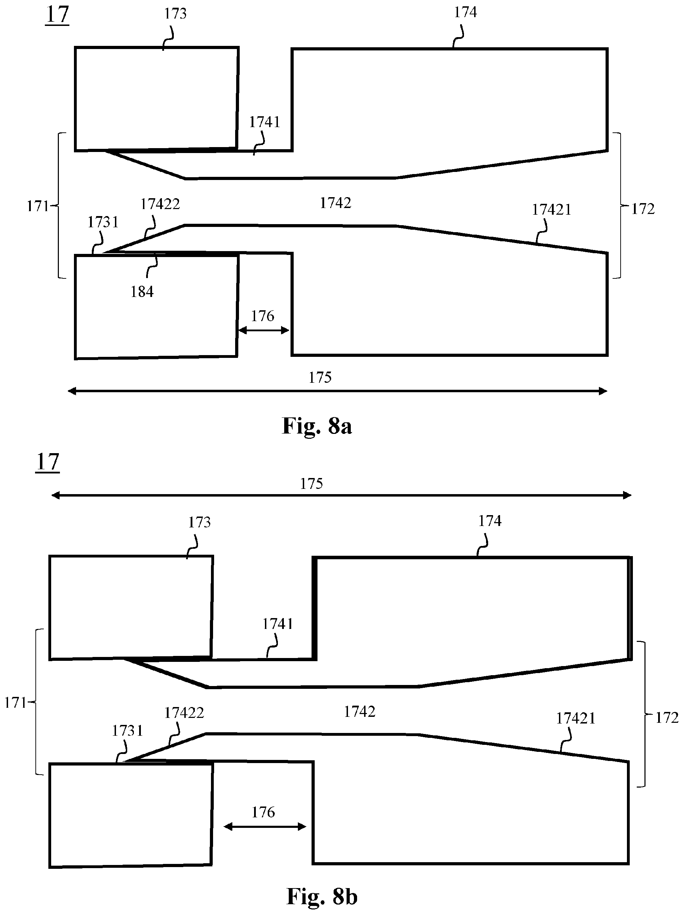

Fig. 8a-b each shows an exemplary embodiment of a length expansion compensator 17 for a filtering system 1 according to the present invention as conceptual schematics in a cross-section along a flow direction of the polymer melt. Both Figs. 8a and 8b show an identical length expansion compensator 17 that only vary in the resulting relative length 175 between the first terminal 171 and the second terminal 172. So, in the following, Fig. 8a and Fig. 8b are described together.

In Fig. 8a-b, the length expansion compensator 17 comprises a first part 173 and a second part 174. Both parts 173 and 174 are hollow and their respective cavities 1731 and 1742 form a continuous flow channel inside the housing of the compensator 17 for conveying polymer melt from the first terminal 171 and the second terminal 172 and vice versa. The first terminal 171 may be referred to as inlet 171 and the second terminal 172 may be referred to as outlet 172 to indicate the polymer melt flow direction that would in this case be from first terminal 171 to second terminal 172. In an alternative manner that does not change the function of the compensator at all, the first terminal 171 may be an outlet and the second terminal 172 may be an inlet to indicate the polymer melt flow direction that is from the second terminal 172 to the first terminal 171.

The first part 173 is basically formed as a hollow cylinder. It has the cavity 1731 and comprises the inlet 171 for connections to other components within the filtering system 1 as described above. The first part 173 is the female part as it is removably fixed to divider outlet 102 or filter outlet 112 as described above and not shown in Fig. 8a.

The second part 174 is also hollow and has cavity 1742. It comprises outlet 172 for connections to other components within the filtering system 1 as described above. The second part 174 is the male part as it is removably fixed to pipes 12 or pumps 13 as described above and not shown in Fig. 8a.

The second part 174 comprises a hollow protruding portion 1741 that is arranged centrally aligned at one side of the second part 174 that is opposite to the side at which the outlet 172 is arranged. The hollow protrusion 1741 is formed symmetrical in longitudinal extension of the second part 174. The protrusion 1741 can also be referred to as pipe extension.

The hollow protruding portion 1741 is configured to slide into the cavity 1731 of the hollow female part 173 in a form-fitting sliding manner. Here, the protruding portion 1741 has an outer form that is cylindric with a diameter that is slightly smaller than the diameter of the cavity 1731 of the first part 173.

The protruding portion 1741 slides into cavity 1731 in the sliding direction 176 when the compensator 17 reduces its length 175 (Fig. 8a) in scenarios in which pipes 12 expand due to a temperature increase in the respective filtration path 20 (not shown in Fig. 8a-b). The protruding portion 1741 slides out of the cavity 1731 in the sliding direction 176 when the compensator 17 increases its length 175 (Fig. 8b) in scenarios in which pipes 12 shrink due to a temperature drop in the respective filtration path 20 (not shown in Fig. 8a-b). The difference in length 175 is indicated in Figs. 8a-b with different lengths 175 of the respective arrows. The maximum length 175 may be in the range of 350 to 420 Millimeter, preferably 380 Millimeter, but is highly dependent on the construction of the filtering system 1. The minimum length may be in the range of 1 to 5 Millimeter.

The cavity 1742 in the hollow male part 174 comprises a first truncated portion 17421 in lengthwise cross-section with its widest part being arranged at the outlet 172. Its narrowest part is arranged in the center of cavity 1742, preferably arranged out of the protruding portion 1741. For instance, the widest part of the first truncation 17421 has a diameter that is identical to a pipe diameter of pipe 12 to which the outlet 174 is connected. The pipe diameter with the filtering system 1 should be identical throughout all pipes 12 within the filtering system 1 and for instance be in the range of 80 to 120 Millimeter, preferably 100 Millimeter. With this first truncation 17421, the diameter of the cavity within the male part 174 is increased in longitudinal flow direction which is advantageous for reducing flow resistance or flow stress when the polymer melt flow exits from the male part 174 to a connected pipe (not shown in Fig. 8a), preferably by keeping pressure value constant within the male part 174 and to reduce additional forces in longitudinal flow direction.

The cavity 1742 in the hollow male part 174 has a second truncated portion 17422 in lengthwise cross-section arranged in the protruding portion 1741 with its wider part being facing towards the hollow female part 173.

The cavity 1742 has an inner portion between the first truncated portion 17421 and the second truncated portion 17422 that has a constant diameter that is smaller than the diameter of the widest parts of the first truncated portion 17421 and the second truncated portion 17422. The diameter of the inner portion may be in the range of 50 to 80 Millimeter, preferably 60 Millimeter, more preferably 70 Millimeter. The length of the inner portion of the cavity 1742 may have a length in the range of 130 to 170 Millimeter, preferably 150 Millimeter.

With this shape of the cavity 1742, a shear rate difference caused by the flow channel inside the compensator 17, namely the cavities 1731 and 1742 can be reduced to its minimum, e.g. in the range of 15 to 35 s⁻¹. In addition, the pressure loss caused by the compensator 17 can be reduced to its minimum, e.g. in the range of 7 to 15 bar.

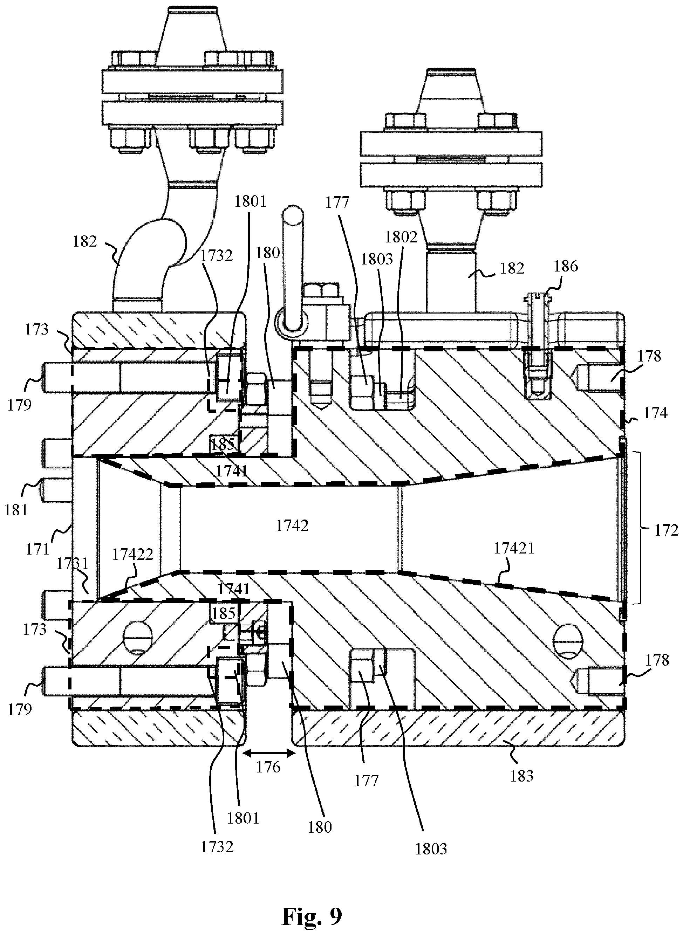

Fig. 9 shows an exemplary embodiment of a length expansion compensator 17 for a filtering system 1 according to the present invention also in cross-section with greater details compared to Figs. 8a-b. The compensator 17 in Fig. 9 is shown in greater details than the conceptual schematics of Figs. 8a-b. However, the overall structure and shape is identical between the compensators 17 shown in Figs. 8a-b and 9 and as indicated by the dashed lines that mark the female part 173 and the male part 174 in Fig. 9. So, in following description of Fig. 9 only the further differences and greater details are explained, whereas the main concept as described with Fig. 8a-b is also valid and applicable for the compensator shown in Fig. 9 and is not repeated. The shear rate in section 1742 of the compensator 17 is higher than in the component. Each truncation leads to an increase in the shear rate within the compensator 17. The pressure loss per centimeter of flow path also increases in this section 1742 compared to the larger component flow channel (or pipe) diameter. Both truncations 17421 and 17422 are structurally necessary and should be kept as short as possible.

Fig. 9 further shows that the hollow male part 174 and the hollow female part 173 are movably mechanically connected to each other via two sliding rods 180. The sliding rods 180 avoid any misalignment between the male part 174 and the female part 173 during its sliding movement for length adaption in sliding direction 176. The number of sliding rods 180 can be higher than 2, preferably 4, 6 or 8, for smoothly guiding the sliding movement from the male part 174 into the female part 173. Each sliding rod 180 may have a first end 1801 that is fixedly arranged in the female part 173, e.g. using a thread at the first end 1801 and a respective thread hole 1732 in the female part 173. The number of the sliding rods 180 can be identical to the number of fastening screws of the respective flange at the pipe-connection.

A sliding length in the sliding direction 176 between the hollow male part 174 and the hollow female part 173 is limited using at least one sliding stop 177. Each sliding stop 177 can be built as a screw nut that is screwed on a thread 1803 that is arranged at the second end 1802 of the sliding rod 180, the second end 1802 being distal from the first end 1801. The sliding stops 177 stop the movement between male part 174 from the female part 173 at a maximum length (distance) that the compensator 17 should have. The sliding stops 177 also avoids that the male part 174 and the female part 173 are separated from each other, e.g. due to component movements and vibrations in the filtering system 1. The sliding stops 177 also avoid the female part and the hollow part from being pressed apart caused by internal pressure within the hollow.

At the side of the outlet 172 there are also shown pipe mounts 178 at the male part 174, preferably there are 6 or 8 pipe mounts 178 that are equidistantly arranged on the surface where the outlet 172 is arranged. The pipe mounts 178 can be thread holes into which screws are screwed that are arranged in respective holes within a flange of the pipe 12 that should be connected to the outlet 172.

At the side of the inlet 171 there are component mounts 179 at the female part 173, preferably there are 6 or 8 component mounts 179 that are equidistantly arranged on the surface where the inlet 171 is arranged. The component mounts 179 can be screws that are arranged in through-holes of the female part 173, wherein these screws are screwed into respective thread holes of the component to which the compensator 17 is to be connected, e.g. a divider (outlet thereof) or a filter device 11 (outlet thereof), both not shown in Fig. 9.

At the side of the inlet 171 there is also shown an alignment rod 181 at the female part 173 for enhancing the assembling of the compensator 17 to the desired component within the filtering system 1, e.g. a divider (outlet thereof) or a filter device 11 (outlet thereof), both not shown in Fig. 9.

In Fig. 9 there is also shown a heat pipe 182 through which a heat-liquid from a heating system (not shown) of the filtering system 1 is guided so as to preheat the compensator 17 and to ensure a stabile high temperature for conveying the polymer melt. Additionally, a heat shield 183 (or alternatively an isolation) is shown. A temperature sensor 186 is arranged beneath the heat shield 183 to measure the temperature of the casing of the compensator 17 to identify the end of a pre-heating phase and to observe the temperature with the filtering system in a filtering mode.

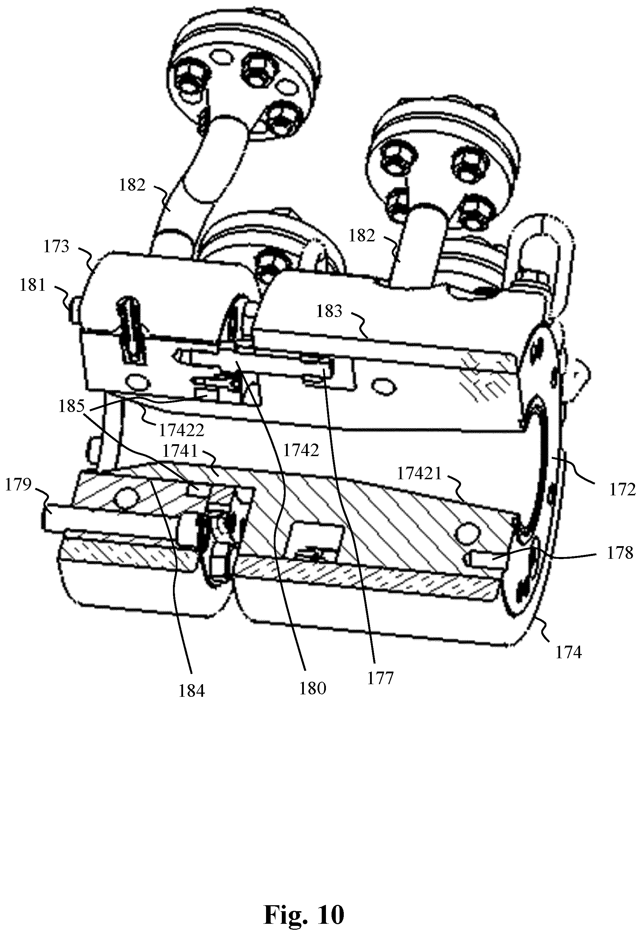

Fig. 10 shows an exemplary embodiment of the length expansion compensator 17 for a filtering system 1 according to the present invention in perspective view with greater details compared to Figs. 8a-b. The compensator 17 in Fig. 10 is shown in greater details than the conceptual schematics of Figs. 8a-b but also shows the further details as described and shown with Fig. 9. However, the overall structure and shape is identical between the compensators 17 shown in Figs. 8a-b, Fig. 9 and Fig. 10. So, in the following description of Fig. 10 only the further differences and greater details are explained, whereas the main concept as described with Fig. 8a-b and Fig. 9 is also valid and applicable for the compensator 17 as shown in Fig. 10 and is not repeated.

Fig. 10 shows that the compensator 17 has an outer casing in form of a hollow cylinder having the two parts 173 and 174. Fig. 10 also provides a 3D view of the cavity 1742 of the male part 174, the cavity 1742 being pipe-shaped in an inner portion having a constant diameter and having first truncation 17421 and second truncation 17422 as already described in Figs. 8a-b. It is further shown in Fig. 10 that there are two heat pipes 182 connected to a respective heat shield 183 for pre-heating the compensator and to ensure a stable high temperature during filtering mode.

Also indicated in Fig. 10 is a clearance 184 which is a small gap between the female part 173 and the protruding portion 1741 of the male part 174 so that the male part 174 can slide into and out of the cavity 1731 of the female part 173. So, a polymer melt is isolated from the atmosphere by the width of clearance 184 in the protruding portion 1741.

Additionally, a sealing element, here installed as a sealing ring 185 is arranged between the hollow male part 174 and the hollow female part 173. This sealing ring 185 avoids that polymer melt can exit the filtering system 1 at the compensator 17. The sealing ring 185 also has a clamping function to hold the male part 174 of the compensator 17 in its position.

The sealing can be achieved using the sealing rings 185 fitted between the smaller protruding portion 1741 (tubular extension) and the larger cavity 1731 of the female part 173. The insertion of the protruding portion 1741 into the cavity 1731 provided with the clearance 184 is fit to allow axial movement (adjustment) for length adaptation even in the event of corresponding thermal expansion or mechanical stress.

The insertion of the protruding portion 1741 into the cavity 1731 provided with the clearance 184 can be considered as an interlocking principle that let alone would be sufficient to form a length-adjustable flow channel 180 if it is ensure that the adjacent components can support these parts 173 and 174. However, the compensator 17 according to the invention also provides a clamping function via the sealing ring 184 in order to be able to apply axial forces and to be able to carry out disassembly by shortening the length of the compensator 17 in the event of adhesions or other blockages.

Sealing is not necessary needed with the help of the sealing rings 185 but in increase the sealing. However in a variant the form-fitted connection between the parts 173 and 174 with a carefully executed clearance and fitting allows the omittance of additional suitable sealing ring 185.

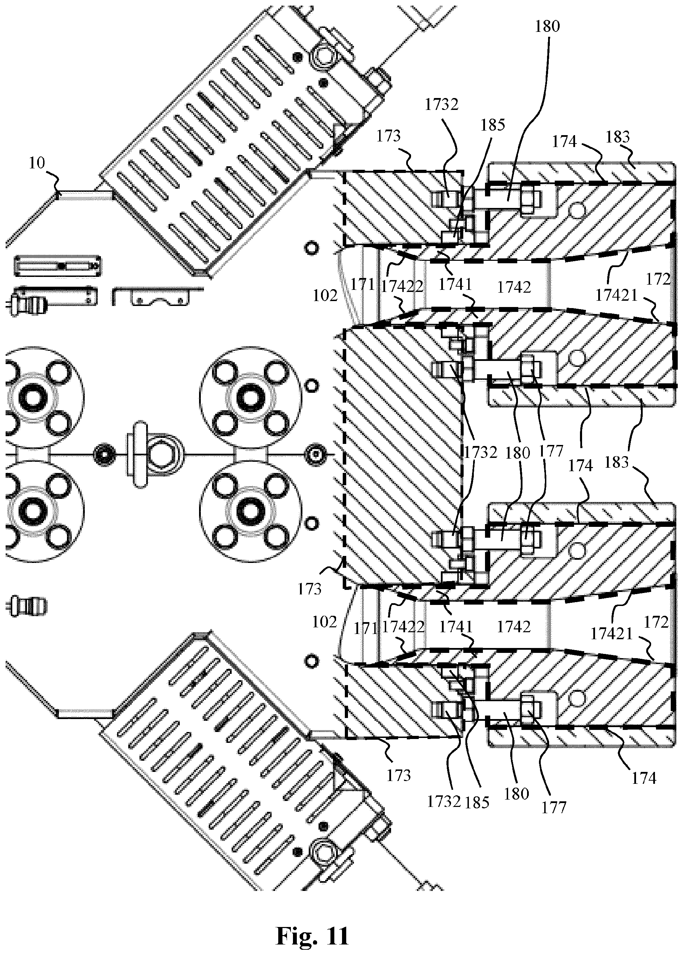

In Fig. 11 an exemplary embodiment of two length expansion compensators 17 arranged at respective outlets 102 of divider 10 with multiport valve are shown. In contrast to the compensator 17 above, the compensator 17 as shown in Fig. 11 has a female part 173 that is integrally formed with the divider 10. This reduces the overall size required for a system having a compensator 17. The function, form and position of the female part 173 remains identical to what has already been described in the Figures above and to this description it is directly referred. Instead of one compensator 17 per each outlet 102, it is also possible to have only one compensator 17 downstream the divider 10. Then, the female part 173 is only integrally formed at the outlet 102 at which the male part 174 is to be connected.

Since the compensator 17 is operable in both flow directions, the female part 174 may also be integrally formed with an inlet of a component.

Within the scope of the invention, all described and/or drawn and/or claimed elements can be combined with each other as desired.

### Reference list

- 1: System
- 10: Divider (multi-port valve)
101 Inlet
102 Outlet
- 11: Filter device
111 Inlet
112 Outlet
113 Casing
114 Filtration area
- 12: Pipe
- 13: Pump
- 14: Combiner (multi-port valve)
141 Inlet
142 Outlet
- 15: Extruder
- 16: Pelletizer
161 Diverter valve
162 Dryer system
- 16a: polymer processing system
- 17: Heat compensator
171 Inlet (first terminal)
172 Outlet (second terminal)
173 Female part
1731 cavity
1732 thread hole
174 Male part
1741 protruding portion
1742 cavity
17421 first truncated portion
17422 second truncated portion
175 Length
176 Sliding direction
177 Sliding stop
178 Pipe-Mount
179 Component-mount
180 Sliding rod
1801 First end
1802 Second end
1803 Thread
181 alignment rod
182 Heating pipe
183 Heating shield
184 Clearance
185 Sealing element, sealing ring
186 Temperature sensor
- 20: filtration path

## Claims

**1.** A filtering system (1) for filtration of a polymer melt flow, the polymer melt flow being conveyed within the filter system (1) under high pressure and high temperature, preferably wherein the polymer melt flow being made from recycling thermoplastic material, the filtering system (1) comprising:
- a divider (10) for dividing an unfiltered polymer melt flow into two or more unfiltered partial polymer melt flows, wherein the divider (10) comprises:
∘ a divider inlet (101) at which the unfiltered polymer melt flow is fed; and
∘ two or more divider outlets (102), each divider outlet (102) being configured for delivering one of the two or more unfiltered partial polymer melt flows;
- two or more filter devices (11),
o each of the filter devices (11) having its own independent casing (113);
o each of the filter devices (11) being removably pipe-connected (12) downstream of a respective one of the two or more divider outlets (102) and having a filter device inlet (111) at which one respective unfiltered partial polymer melt flow is fed;
o each of the filter devices (11) being configured for filtration of a respective one of the two or more unfiltered partial polymer melt flows when switched into a filtering-mode and having a filter device outlet (112) at which one respective filtered partial polymer melt flow is delivered;
- wherein the filtering system (1) being configured to operate in a full filtering mode in which all filter devices (11) deliver respective partial filtered polymer melt flows continuously and simultaneously.

**2.** The filtering system (1) according to claim 1, wherein at least one of the two or more filter devices (11) is configured to be switched into a self-cleaning mode and the filtering system (1) is configured to operate in a filtering mode in which one of the two or more filter devices (11) is in filtering mode whereas another one of the two or more filter devices (11) is in said self-cleaning mode.

**3.** The filtering system (1) according to claim 1 or 2, wherein for filtration of the unfiltered partial polymer melt flow, at least one of the two or more filter devices (11) comprises one or more dimensionally stable and robust filtration areas (114) arranged in a flow channel between the filter device inlet (111) and filter device outlet (112) within the casing (113).

**4.** The filtering system (1) according to one of the preceding claims, wherein for filtration of the unfiltered partial polymer melt flow, at least one of the two or more filter devices (11) comprises at least two filtration areas (114) within its casing (113), wherein these filtration areas (114) being arranged in series between its filter device inlet (111) and its filter device outlet (112).

**5.** The filtering system (1) according to one of the preceding claims, wherein for filtration of the unfiltered partial polymer melt flow, at least one of the two or more filter devices (11) comprises at least two filtration areas (114) within its casing (113), wherein these filtration areas (114) being arranged in parallel between its filter device inlet (111) and its filter device outlet (112).

**6.** The filtering system (1) according to one of the preceding claims, further comprising a heating system configured for pre-heating the filtering system (1) before switching at least one of the two or more filter devices (11) into the filtering-mode, wherein preferably the heating system being a liquid-based heating system configured for pipe-based pre-heating of each component (10, 11, 12, 13, 14, 15, 16) in the filtering system (1) and/or wherein preferably the heating system being an electric heating system configured for pre-heating of each component (10, 11, 12, 13, 14, 15, 16) in the filtering system (1).

**7.** The filtering system (1) according to one of the preceding claims, further comprising one or more length expansion compensators (17) within one or more filtration paths (20) of the filtering system (1), each length expansion compensator (17) being configured to adapt its relative length (175) to compensate a respective length difference that is caused by mechanical stress based on dimensional intolerances and/or component-movement and/or caused by thermal stress based on temperature change within the filtering system (1).

**8.** The filtering system (1) according to one of the preceding claims, wherein a length expansion compensator (17) is pipe-connectedly arranged in the pipe connection (12) between a divider outlet (102) and its respective filter device inlet (111) and/or wherein a length expansion compensator (17) is pipe-connectedly arranged in the pipe connection (12) downstream of a respective filter device outlet (112), the length expansion compensator (17) having a variable length (175), wherein the length expansion compensator (17) is configured to compensate a respective length difference that is caused by mechanical stress based on dimensional intolerances and/or component-movement and/or caused by thermal stress based on temperature change within the filtering system (1).

**9.** The filtering system (1) according to one of the claims 7 or 8, wherein the length expansion compensator (17) comprises a hollow male part (174) and a hollow female part (173), wherein the hollow male part (174) comprises a protruding portion (1741) configured to slide into the cavity (1731) of the hollow female part (173) in a form-fitting sliding manner.

**10.** The filtering system (1) according to claim 9, wherein the male part (174) comprises a terminal (172) for being removably connected to a respective terminal of another component in the filtering system (1) being arranged upstream or downstream of the length compensator (17), wherein the cavity (1742) in the hollow male part (174) has a first truncated portion (17421) in lengthwise cross-section with its widest part being arranged at the terminal (172), wherein the terminal (172) preferably being an outlet (172) connected to a terminal of a pipe (12).

**11.** The filtering system (1) according to claim 9 or 10, wherein the cavity (1742) in the hollow male part (174) has a second truncated portion (17422) in lengthwise cross-section arranged in the protruding portion (1741) with its widest part being facing towards the hollow female part (173).

**12.** The filtering system (1) according to claims 9 to 11, wherein the hollow male part (174) and the hollow female part (173) being movably mechanically connected to each other via at least one sliding rod (180).

**13.** The filtering system (1) according to claims 9 to 12, wherein a sliding length between the hollow male part (174) and the hollow female part (173) is limited using at least one stop (177).

**14.** The filtering system (1) according to claims 9 to 13, wherein polymer melt is isolated from the atmosphere by a clearance width (184) in the protruding portion (1741) and a sealing ring (185) being arranged between the hollow male part (174) and the hollow female part (173).

**15.** The filtering system (1) according to claims 9 to 14, wherein the hollow female part (173) is integrally formed in the casing of a component of the filtering system (1).

**16.** The filtering system (1) according to one of the preceding claims, further comprising a pump (13) positioned upstream the divider (10) and/or downstream one or more filter devices (11).

**17.** The filtering system (1) according to one of the preceding claims, wherein the divider (10) comprises a multi-port valve configured to open and close the two or more divider outlets (102) individually, wherein one of the two or more divider outlets (102) is open to feed unfiltered partial polymer melt flow to a filter device inlet (111) of one of the two or more filter devices (11) that is switched into filtering mode, whereas another one of the two or more divider outlets (102) is closed and no unfiltered partial polymer melt flow is fed to a filter device inlet (111) of the another one of the two or more filter devices (11) that is switched into a maintenance mode and/or an exchange mode.

**18.** The filtering system (1) according to one of the preceding claims, further comprising a combiner (14) for combining the two or more filtered partial polymer melt flows into one combined filtered polymer melt flow, wherein the combiner (14) comprises:
- two or more combiner inlets (141) each being pipe-connected downstream to a respective filter outlet (112) of one of the two or more filter devices (11) at which a respective one filtered partial polymer melt flow is delivered that is fed to the respective combiner inlet (141); and
- a combiner outlet (142) configured for delivering the filtered polymer melt flow that is combined from each partial filtered polymer melt flow.

**19.** The filtering system (1) according to claim 18, wherein the combiner (14) comprises a multi-port valve configured to open and close the two or more combiner inlets (141) individually, wherein one of the two or more combiner inlets (141) is open such that filtered partial polymer melt flow is fed from a filter device outlet (112) of one of the two or more filter devices (11) that is switched into filtering mode whereas another one of the two or more combiner inlets (141) is closed such that no filtered partial polymer melt flow is fed from a filter device outlet (112) of another one of the two or more filter devices (11) that is switched into a maintenance mode and/or an exchange mode.

**20.** A method for operating a filtering system (1) according to one of the preceding claims, the method comprising the steps of:
- pre-heating at least one of two or more filtration paths (20) within the filtering system (1), each filtration path (20) having one of the two or more filter devices (11);
- switching the filter system (1) in full filtering mode, wherein when in full filtering mode, all filter devices (11) deliver their respective partial filtered polymer melt flows continuously and simultaneously;
- monitoring a self-cleaning condition of each of the two or more filter devices (11) independently when the filter device (11) is in filtering mode, wherein when a self-cleaning condition is fulfilled for one of the two or more filter devices (11), the filter system (1) switches one of the filter devices (11) into a self-cleaning-mode for which the self-cleaning condition is fulfilled, whereas at least another one of the two or more filter devices (11) remains in filtering mode.

**21.** The method according to claim 20, further comprising:
- cooling at least one of two or more filtration paths (20) within the filtering system (1), when a maintenance state of the at least one of the two or more filter devices (11) is reached so that this one or more filter device (11) stops delivering of the respective filtered partial polymer melt flow whereas at least another remaining filter device (11) delivers partial filtered polymer melt flow.

**22.** A length expansion compensator (17) within a pipe-connected system in which a liquid is conveyed under high pressure and high temperature, wherein the length expansion compensator being pipe-connectedly arranged within the system and being configured to adapt its relative length (175) to compensate a respective length difference that is caused by mechanical stress based on dimensional intolerances and/or component-movement and/or caused by thermal stress based on temperature change within the pipe connected system, the length expansion compensator (17) comprising:
- a hollow male part (174) and a hollow female part (173), wherein the hollow male part (174) comprises a protruding portion (1741) configured to slide into the cavity (1731) of the hollow female part (173) in a form-fitting sliding manner.

**23.** The length expansion compensator (17) according to claim 22, wherein the male part (174) comprises a terminal (172) for being removably connected to a respective terminal of another component in the pipe-connected system being arranged upstream or downstream of the length compensator (17), wherein the cavity (1742) in the hollow male part (174) has a first truncated portion (17421) in lengthwise cross-section with its widest part being arranged at the terminal (172), wherein the terminal (172) preferably being an outlet (172) connected to a terminal of a pipe (12).

**24.** The length expansion compensator (17) according to claim 22 or 23, wherein the cavity (1742) in the hollow male part (174) has a second truncated portion (17422) in lengthwise cross-section arranged in the protruding portion (1741) with its widest part being facing towards the hollow female part (173).

**25.** The length expansion compensator (17) according to one of the claims 22 to 24, wherein the hollow male part (174) and the hollow female part (173) being movably mechanically connected to each other via at least one sliding rod (180).

**26.** The length expansion compensator (17) according to one of the claims 22 to 25, wherein a sliding length between the hollow male part (174) and the hollow female part (173) is limited using at least one sliding stop (177).

**26.** The length expansion compensator (17) according to one of the claims 22 to 25, wherein the liquid conveyed in the system is isolated from the atmosphere by a clearance width (184) in the protruding portion (1741) and a sealing ring (185) being arranged between the hollow male part (174) and the hollow female part (173).

**27.** The length expansion compensator (17) according to one of the claims 22 to 26, wherein the hollow female part (173) is integrally formed in the casing of a component of the pipe-connected system.
